(19) Europäisches Patentamt
European Patent Office
Office européen des brevets

(11) **EP 4 766 010 A1**

(12) **EUROPEAN PATENT APPLICATION**

(43) Date of publication:
24.06.2026 Bulletin 2026/26

(21) Application number: 25213656.9

(22) Date of filing: 05.11.2025

(51) International Patent Classification (IPC):
*H04W 84/12* (2009.01)        *H04W 88/06* (2009.01)

(52) Cooperative Patent Classification (CPC):
H04W 88/06; H04W 84/12

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 20.12.2024 US 202418989019

(71) Applicant: INTEL Corporation
Santa Clara, CA 95054 (US)

(72) Inventors:
• MITTY, Harish
560097 Bangalore (IN)
• KAPILA, Smit
560102 Bangalore (IN)
• THAKUR, Jayprakash
560035 Bangalore (IN)
• MASTI, Sandeep
560103 Bengaluru (IN)
• SINGH, Balvinder Pal
490020 Bhilai (IN)
• BANAVARA, Prasanna Ramarao
560078 Bangalore (IN)

(74) Representative: Viering, Jentschura & Partner mbB
Patent- und Rechtsanwälte
Am Brauhaus 8
01099 Dresden (DE)

(54) **MULTIPLE WIRELESS CONNECTIONS MANAGEMENT**

(57) An apparatus is described, where the apparatus may include: an interface configured to communicate with a first further communication device attachable to a communication device and a second further communication device external to the communication device and the first further communication device; and a processor configured to: determine a result representing whether the first further communication device is in an idle mode; instruct, based on the result, the first further communication device to perform channel measurements; obtain channel measurement results of the first further communication device from the interface; and configure the interface with a configuration that is based on the channel measurement results of the first further communication device to communicate with the second further communication device.

Configuring an interface to communicate with a first further communication device attachable to a communication device and a second further communication device external to the communication device and the first further communication device — 601

Determining a result representing whether the first further communication device is in an idle mode — 602

Instructing, based on the result, the first further communication device to perform channel measurements — 603

Obtaining channel measurement results of the first further communication device from the interface — 604

Configuring the interface with a configuration that is based on the channel measurement results of the first further communication device to communicate with the second further communication device — 605

FIG. 6

EP 4 766 010 A1

**Description**

**Background**

In radio communication networks in accordance with many radio communication technologies, such as Wireless LAN (also referred to as Wi-Fi), Bluetooth, Fourth Generation (LTE), and Fifth Generation (5G) New Radio (NR), various methods are employed to provide wireless data transfer with desired efficiency, speed, and reliability. In radio communication networks, maintaining efficient, fast, and reliable wireless data transfer is often challenged by interference, which can degrade signal quality and data throughput. Interference can arise from a variety of internal and external sources, and its impact is particularly significant in complex communication environments where multiple devices and frequency bands are active simultaneously.

In recent years, multi-processor systems have become prevalent in various technological domains, including mobile devices, embedded systems, and Internet of Things (IoT) applications. These systems typically consist of two or more processors working together to execute different tasks simultaneously. A common configuration in such systems may involve associating each processor with a dedicated radio communication circuit, such as a transceiver, to handle wireless communication tasks. This architecture can be particularly useful in scenarios where multiple wireless communication channels are required to manage different types of data transmissions or to support parallel processing operations. The use of dedicated radio communication circuits for each processor can ensure that the system can handle multiple communication tasks independently without interference from other processes while each processor and its dedicated radio communication circuit can operate standalone.

**Brief Description of the Drawings**

In the drawings, like reference characters generally refer to the same parts throughout the different views. The drawings are not necessarily to scale, emphasis instead generally being placed upon illustrating the principles described herein. In the following description, various aspects are described with reference to the following drawings, in which:

FIGs. 1 and 2 depict a general network and device architecture for wireless communications and/or sensing operations;
FIG. 3 shows an example of a communication network including a multi-processor system and an external communication device;
FIG. 4 shows an illustrative example of an apparatus in accordance with various aspects described herein;
FIG. 5 shows an example of a messaging flow in accordance with various aspects described herein;
FIG. 6 shows an example of a method;
FIG. 7 shows an example of a method.

**Description**

The following detailed description refers to the accompanying drawings that show, by way of illustration, exemplary details, and aspects in which aspects described herein may be practiced.

Multi-processor systems with multiple radio communication chains have become increasingly relevant in the context of modern wireless communication technologies. One notable example in this domain is the dual-system-on-chip (SoC) 2-in-1 device architecture. In this configuration, two computing devices can be attached (or integrated, in some examples) into a single system, with each device having its own processing unit and associated radio communication circuit.

Such a multi-processor system setup may allow the system to manage multiple communication tasks concurrently by assigning a respective task to a separate processor and its corresponding radio communication circuit. This approach can enhance the overall system's ability to manage complex workloads efficiently while maintaining reliable wireless data transfer. However, despite the advantages offered by these multi-processor systems with multiple radio communication circuits, there may be significant shortcomings that affect their overall efficiency. One key issue can arise when one of the processors becomes idle. In many cases, processors in multi-processor systems may not operate continuously; instead, they may enter a low-power or idle state when they are not actively engaged in executing tasks. When this occurs, the radio communication circuit associated with the idle processor may also remain unused, which may result in the underutilization of valuable hardware resources as the idle radio communication circuit could potentially be leveraged for other purposes.

A typical example of this configuration may include the use of short-range wireless communication technologies such as Wi-Fi and Bluetooth, which are widely used in consumer electronics, mobile devices, and home networks. Traditionally, multi-processor systems with multiple radio communication chains may have been employed to improve the overall performance of wireless communication networks. The dual-SoC 2-in-1 device architecture, for instance, can allow two computing devices to be attached or integrated into a single system, with each device having its own processing unit and associated radio communication circuit of a wireless communication technology.

Aspects described herein may address these inefficiencies in multi-processor systems with radio communication circuits, particularly in the context of short-range wireless communication technologies such as Wi-Fi and Bluetooth. These technologies are widely used for providing wireless data transfer over short distances, and they are often employed in environments where multiple devices are connected to a single network. In such environments, maintaining efficient and reliable wireless communication may be critical for ensuring optimal performance and user satisfaction.

Some aspects described herein may address improving wireless communication coverage, particularly in Wi-Fi networks. Wi-Fi networks can be commonly used in homes, offices, and public spaces to provide high-speed internet access to multiple devices simultaneously. However, Wi-Fi coverage can be limited by factors such as physical obstructions (e.g., walls) and interference from other wireless devices operating on similar frequency bands. By optimizing the utilization of idle radio communication circuits within multi-processor systems, it may be possible to extend Wi-Fi coverage and ensure that all areas within a given environment receive strong and reliable signals.

In some examples, described aspects may address achieving high hybrid automatic repeat request (HARQ) rates in areas with good wireless communication coverage. HARQ may refer to a protocol used in wireless communication systems to ensure reliable data transmission by automatically retransmitting packets that are not successfully received by the destination device. In areas with good coverage, it may be desirable to maximize HARQ rates to minimize packet loss and ensure that data is transmitted efficiently. By leveraging idle radio communication circuits in multi-processor systems, it may be possible to enhance HARQ performance and reduce transmission errors.

In some examples, described aspects may address an AI-driven channel optimization. Wireless communication channels can become congested when multiple devices are operating on the same frequency band simultaneously. This can lead to interference and degraded signal quality, particularly in environments where many devices are connected to a single network (e.g., smart homes or office buildings). Artificial intelligence techniques can be employed to analyze channel conditions in real-time and dynamically adjust channel assignments based on factors such as signal strength, interference levels, and device activity. By integrating artificial intelligence-driven channel optimization into multi-processor systems with multiple radio communication circuits, it may be possible to improve overall network performance and reduce interference.

In some examples, described aspects may address home network optimization. Modern homes may often contain numerous connected devices that rely on Wi-Fi or Bluetooth for wireless data transfer. These devices may include smartphones, tablets, laptops, smart TVs, home automation systems (e.g., smart thermostats), and more. Managing these devices efficiently may require careful allocation of network resources to ensure that each device receives sufficient bandwidth without causing congestion or interference for other devices on the network. By optimizing the utilization of idle radio communication circuits within multi-processor systems, it may be possible to enhance home network performance by dynamically reallocating resources based on real-time demand.

In some aspects, the described aspects may include user feedback integration. User feedback can provide valuable insights into network performance from an end-user perspective. For example, users may report issues such as slow internet speeds or dropped connections in certain areas of their home or office environment. By incorporating user feedback into the other aspects described herein, it may be possible to identify problem areas within the network and adjust resource allocation accordingly.

In some aspects, described aspects may include predictive analysis to optimize network performance in multi-processor systems with multiple radio communication circuits. Predictive analysis may include using historical data (e.g., past network usage patterns) to forecast future demand for network resources. For example, if a certain area of a home experiences high Wi-Fi usage during specific times of day (e.g., during family movie nights), predictive analysis could be used to allocate additional resources (e.g., idle radio communication circuits) during those times to ensure optimal performance.

In some aspects, described aspects may include seamless handover between different wireless networks. Seamless handover may refer to the ability of a device to switch between different networks (e.g., from Wi-Fi to cellular) without experiencing interruptions in service or degradation in performance. This may be particularly important for mobile devices that move between different environments (e.g., from indoors where Wi-Fi is available to outdoors where cellular networks are used). By optimizing resource allocation within multi-processor systems with multiple radio communication circuits, it may be possible to facilitate seamless handover between different networks by ensuring that each processor has access to sufficient resources when needed.

In accordance with various aspects provided herein, an apparatus for a communication device may include a communication interface and a processor. The communication interface may be configured to communicate with two further devices: a first further communication device, which is attachable to the communication device, and a second further communication device, which is external to both the communication device and the first further communication device. The processor may determine whether the first further communication device is in an idle mode, instruct the first further communication device to perform channel measurements based on this determination, obtain the channel measurement results through the communication interface, and configure the communication interface based on these results to communicate with the second further communication device to leverage the idle radio communication circuit of the first further communication device for performing channel measurements. This may improve overall resource utilization by using otherwise idle hardware components, and may allow for dynamic optimization of wireless communication with the second further communication device based on real-time channel conditions measured by the first further communication device.

In an example, before obtaining the channel measurement results from the first further communication device, the communication interface may communicate with the second further communication device according to a further configuration which differs from the configuration based on those results. Correspondingly, the processor may use these aspects to reconfigure its own communication interface according to information provided by the first further communication device, which may further provide that there is no interruption in communication with the second further communication device while awaiting updated channel measurement results from the first further communication device with the intention to maintain continuous and reliable wireless communication even during periods of reconfiguration. This may support aspects such as seamless handover and home network optimization.

In an example, the further configuration may be a configuration in which the communication interface communicates with the second further communication device via a first radio communication channel. Upon receiving channel measurement results from the first further communication device, the processor may determine a second radio communication channel based on these results, and configure the apparatus to communicate via this second radio communication channel, which may provide a dynamic channel switching based on real-time data from an idle radio circuit, which may provide enhanced flexibility in selecting optimal channels for wireless transmission, reducing interference and improving overall network performance and address aspects such as AI-driven channel optimization and high HARQ rates in good wireless coverage.

In an example, before obtaining channel measurement results from the first further communication device, the apparatus may communicate with a first network access node according to a different configuration. The second further communication device in this case may be a second network access node. Correspondingly, in multi-node scenarios where different network access nodes are involved in communications, the processor may dynamically select from multiple access points or nodes based on real-time measurements from the idle device, which may result in seamless handover between network nodes and home network optimization, particularly in environments with multiple access points or mesh networks.

In an example, the processor may select the second network access node from available network access nodes based on channel measurement results obtained from the first further communication device, which may result in enhanced decision-making regarding which network access node provides optimal connectivity at any given time, based on real-time data gathered from the idle device. Correspondingly, predictive analysis and seamless handover may be provided. In some examples, the processor may instruct the apparatus to perform a handover from the first network access node to the second network access node based on channel measurement results obtained from the first further communication device in a scenario where seamless transition between different network nodes may be required without interrupting ongoing communications to improve mobility within networks, allowing devices to switch between nodes smoothly as conditions change, which may align with the aspects such as seamless handover and improved Wi-Fi coverage, particularly in environments where users can move between different areas covered by different access points.

In an example, the processor may implement an artificial intelligence or machine learning model, where channel measurement results are provided to this trained artificial intelligence and/or machine learning model. The model may determine an output representing at least one radio communication channel or a candidate network access node for the determination of the configuration by the processor to enhance adaptability and optimization based on complex patterns that may not be immediately apparent through traditional algorithms. In some examples, the model may determine radio channel assignments for communicating with other devices within that network and the processor may encode information representing these assignments for transmission back to the second further communication device. In some examples, the processor may integrate user feedback into artificial intelligence and/or machine learning-based decision-making processes, where user feedback about network performance may affect how configurations are determined by artificial intelligence and/or machine learning models for more personalized optimization strategies that reflect real-world user experiences.

In some examples, the processor may instruct the apparatus to operate as a relay between two other devices, which may be the first further communication device and the second further communication device, to extend coverage and improve connectivity in environments where direct connections between devices may not be possible due to distance or interference. In some examples, the processor may perform predictive analysis to determine radio conditions for communicating with other devices based on past measurement results from the idle device, which may result in improved foresight into changing conditions within wireless environments to allow for preemptive adjustments before performance degrades significantly. In some examples, the periodic or interval-based instructions for performing channel measurements by idle devices may be facilitated by the processor to configure the idle device accordingly for continuous monitoring of changing conditions within wireless environments without requiring constant manual intervention.

In some examples, the apparatus may include two separate interfaces: one for communicating with each respective the first further communication device and the second further communication device simultaneously. This dual-interface design may improve flexibility in managing multiple connections concurrently without interference between them. In some examples, at least one of these interfaces can operate according to IEEE 802.11 standards (Wi-Fi) while maintaining direct connections with both attached devices simultaneously during active sessions, which may ensure compliance with widely-used standards while enabling efficient multi-device management under common protocols like Wi-Fi Direct or softAP modes.

In accordance with various aspects described herein, an apparatus for a communication device may include a communication interface and a processor. The communication interface may be configured to communicate with a further communication device that is attachable to the communication device. The processor may encode information representing whether the communication device is in an idle mode for transmission to the further communication device, identify a request for channel measurements from the further communication device in response to this transmission, perform measurements on multiple radio communication channels based on received radio signals, and encode the channel measurement results for transmission back to the further communication device, which may facilitate an efficient mechanism for utilizing the idle radio communication circuit of the communication device. By performing channel measurements when the device is idle, the apparatus may enable real-time optimization of network resources without interrupting ongoing communications. In an example, the channel measurement results may include one or more metrics such as received signal strength indicator (RSSI), signal-to-noise ratio (SNR), bit error rate (BER), or hybrid automatic repeat request (HARQ) metrics. The apparatus described herein may be the apparatus of the idle communication device.

In an example, the measurements may include assessing a plurality of radio communication channels based on respective HARQ performance metrics. Furthermore, the information representing the channel measurement results may include one or more recommended radio communication channels based on this assessment for enhanced optimization of channel selection, as it provides recommendations based on HARQ performance-a key metric for ensuring reliable data transmission.

In an example, a scenario where the further communication device is referred to as the first further communication device in these aspects, the processor may select a radio communication channel from the plurality of channels, perform radio communication with a second further communication device via this selected channel to determine a communication metric, and include this channel in the list of recommended channels based on the determined metric, which may add an additional layer of validation by testing selected channels through actual communications before recommending them for improved accuracy in recommending optimal channels since real-world performance data may be factored into the decision-making process.

In an example, the measurements may include identifying available network access nodes based on radio signals received by the communication interface. The information representing the channel measurement results may also include one or more recommended network access nodes based on these measurements for a dynamic selection of network access nodes in addition to selecting optimal channels with the intention of improved flexibility in managing connections within complex networks where multiple access points are available. This may facilitate seamless handover between different access nodes by providing real-time recommendations about which node offers the best connection at any given time.

In an example, the processor may select a network access node from among available nodes, perform radio communications with this node to determine a communication metric, and include this node in the list of recommended nodes based on this metric. This feature adds validation through direct testing of selected network access nodes before recommending them for improved reliability in selecting access nodes since actual performance data is used to inform decisions. In an example, the processor may determine whether to perform measurements periodically or at designated intervals based on requests from other devices for continuous monitoring of changing network conditions without requiring constant manual intervention. In an example, the apparatus may include a dual-interface configuration where one interface communicates with the further communication device while another interface performs measurements, which may provide increased efficiency and flexibility in managing multiple tasks simultaneously. By separating measurement functions from active communications, the apparatus can perform both tasks concurrently without interrupting ongoing transmissions. In an example, the communication interface may operate according to IEEE 802.11-based protocols (e.g., Wi-Fi) while maintaining a direct connection with the further communication device during measurements across multiple channels.

In an example, in a low-power operation during idle mode, the processor may operate in a low-power state when not actively engaged in tasks for reduced energy consumption during periods of inactivity without sacrificing responsiveness when needed. For example, the processor may determine whether or not the communication device enters idle mode based on information received from another processor external to the primary processor responsible for managing communications, which may improve coordination between different processors within complex systems where multiple components must work together efficiently. In some examples, during idle mode, control over certain aspects of the communication interface may shift between different processors depending on power mode settings for an improved power management through dynamic allocation of control responsibilities between processors depending on current system requirements. In an example, a low-power operation for both processors and interfaces during idle mode may specify that upon receiving requests (e.g., for measurements), these components may "wake up" temporarily before returning to low-power mode after completing their tasks.

The apparatuses and methods described herein may utilize or be related to radio communication technologies. While some examples may refer to specific radio communication technologies, the examples provided herein may be similarly applied to various other radio communication technologies, both existing and not yet formulated, particularly in cases where such radio communication technologies share similar features as disclosed regarding the following examples. Various exemplary radio communication technologies that the apparatuses and methods described herein may utilize include, but are not limited to: a Global System for Mobile Communications ("GSM") radio communication technology, a General Packet Radio Service ("GPRS") radio communication technology, an Enhanced Data Rates for GSM Evolution ("EDGE") radio communication technology, and/or a Third Generation Partnership Project ("3GPP") radio communication technology, for example Universal Mobile Telecommunications System ("UMTS"), Freedom of Multimedia Access ("FOMA"), 3GPP Long Term Evolution ("LTE"), 3GPP Long Term Evolution Advanced ("LTE Advanced"), Code division multiple access 2000 ("CDMA2000"), Cellular Digital Packet Data ("CDPD"), Mobitex, Third Generation (3G), Circuit Switched Data ("CSD"), High-Speed Circuit-Switched Data ("HSCSD"), Universal Mobile Telecommunications System ("Third Generation") ("UMTS (3G)"), Wideband Code Division Multiple Access (Universal Mobile Telecommunications System) ("W-CDMA (UMTS)"), High Speed Packet Access ("HSPA"), High-Speed Downlink Packet Access ("HSDPA"), High-Speed Uplink Packet Access ("HSUPA"), High Speed Packet Access Plus ("HSPA+"), Universal Mobile Telecommunications System-Time-Division Duplex ("UMTS-TDD"), Time Division-Code Division Multiple Access ("TD-CDMA"), Time Division-Synchronous Code Division Multiple Access ("TD-CDMA"), 3rd Generation Partnership Project Release 8 (Pre-4th Generation) ("3GPP Rel. 8 (Pre-4G)"), 3GPP Rel. 9 (3rd Generation Partnership Project Release 9), 3GPP Rel. 10 (3rd Generation Partnership Project Release 10) , 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP Rel. 18 (3rd Generation Partnership Project Release 18), 3GPP 4G, 3GPP LTE Extra, LTE-Advanced Pro, LTE Licensed-Assisted Access ("LAA"), MuLTEfire, UMTS Terrestrial Radio Access ("UTRA"), Evolved UMTS Terrestrial Radio Access ("E-UTRA"), Long Term Evolution Advanced (4th Generation) ("LTE Advanced (4G)"), cdmaOne ("2G"), Code division multiple access 2000 (Third generation) ("CDMA2000 (3G)"), Evolution-Data Optimized or Evolution-Data Only ("EV-DO"), Advanced Mobile Phone System (1st Generation) ("AMPS (1G)"), Total Access Communication arrangement/Extended Total Access Communication arrangement ("TACS/ETACS"), Digital AMPS (2nd Generation) ("D-AMPS (2G)"), Push-to-talk ("PTT"), Mobile Telephone System ("MTS"), Improved Mobile Telephone System ("IMTS"), Advanced Mobile Telephone System ("AMTS"), OLT (Norwegian for Offentlig Landmobil Telefoni, Public Land Mobile Telephony), MTD (Swedish abbreviation for Mobiltelefonisystem D, or Mobile telephony system D), Public Automated Land Mobile ("Autotel/PALM"), ARP (Finnish for Autoradiopuhelin, "car radio phone"), NMT (Nordic Mobile Telephony), High capacity version of NTT (Nippon Telegraph and Telephone) ("Hicap"), Cellular Digital Packet Data ("CDPD"), Mobitex, DataTAC, Integrated Digital Enhanced Network ("iDEN"), Personal Digital Cellular ("PDC"), Circuit Switched Data ("CSD"), Personal Handy-phone System ("PHS"), Wideband Integrated Digital Enhanced Network ("WiDEN"), iBurst, Unlicensed Mobile Access ("UMA"), also referred to as also referred to as 3GPP Generic Access Network, or GAN standard), Zigbee, Bluetooth®, Wireless Gigabit Alliance ("WiGig") standard, mmWave standards in general (wireless systems operating at 10-300 GHz and above such as WiGig, IEEE 802.11ad, IEEE 802.11ay, etc.), technologies operating above 300 GHz and THz bands, (3GPP/LTE based or IEEE 802.11p and other) Vehicle-to-Vehicle ("V2V") and Vehicle-to-X ("V2X") and Vehicle-to-Infrastructure ("V2I") and Infrastructure-to-Vehicle ("I2V") communication technologies, 3GPP cellular V2X, DSRC (Dedicated Short Range Communications) communication arrangements such as Intelligent-Transport-Systems, and other existing, developing, or future radio communication technologies.

The apparatuses and methods described herein may use such radio communication technologies according to various spectrum management schemes, including, but not limited to, dedicated licensed spectrum, unlicensed spectrum, (licensed) shared spectrum (such as LSA = Licensed Shared Access in 2.3-2.4 GHz, 3.4-3.6 GHz, 3.6-3.8 GHz and further frequencies and SAS = Spectrum Access System in 3.55-3.7 GHz and further frequencies), and may use various spectrum bands including, but not limited to, IMT (International Mobile Telecommunications) spectrum (including 450-470 MHz, 690-960 MHz, 1710-2025 MHz, 2110-2200 MHz, 2300-2400 MHz, 2500-2690 MHz, 698-790 MHz, 610-790 MHz, 3400-3600 MHz, etc., where some bands may be limited to specific region(s) and/or countries), IMT-advanced spectrum, IMT-2020 spectrum (expected to include 3600-3800 MHz, 3.5 GHz bands, 600 MHz bands, bands within the 24.25-86 GHz range, etc.), spectrum made available under FCC's "Spectrum Frontier" 4G initiative (including 27.5-28.35 GHz, 29.1-29.25 GHz, 31-31.3 GHz, 37-38.6 GHz, 38.6-40 GHz, 42-42.5 GHz, 47-64 GHz, 64-71 GHz, 61-76 GHz, 81-86 GHz and 92-94 GHz, etc.), the ITS (Intelligent Transport Systems) band of 4.9 GHz (typically 4.85-5.925 GHz) and 63-64 GHz, bands currently allocated to WiGig such as WiGig Band 1 (57.24-59.40 GHz), WiGig Band 2 (59.40-61.56 GHz) and WiGig Band 3 (61.56-63.72 GHz) and WiGig Band 4 (63.72-65.88 GHz), the 60.2 GHz-71 GHz band, any band between 65.88 GHz and 61 GHz, bands currently allocated to automotive radar applications such as 66-81 GHz, and future bands including 94-300 GHz and above. Furthermore, the apparatuses and methods described herein can also employ radio communication technologies on a secondary basis on bands such as the TV White Space bands (typically below 690 MHz) where e.g. the 400 MHz and 600 MHz bands are prospective candidates. Besides cellular applications, specific applications for vertical markets may be addressed such as PMSE (Program Making and Special Events), medical, health, surgery, automotive, low-latency, drones, etc. applications. Furthermore, the apparatuses and methods described herein may also use radio communication technologies with a hierarchical application, such as by introducing a hierarchical prioritization of usage for different types of users (e.g., low/medium/high priority, etc.), based on a prioritized access to the spectrum e.g., with highest priority to tier-1 users, followed by tier-2, then tier-3, etc. users, etc. The apparatuses and methods described herein can also use radio communication technologies with different Single Carrier or OFDM flavors (CP-OFDM, SC-FDMA, SC-OFDM, filter bank-based multicarrier (FBMC), OFDMA, etc.) and e.g. 3GPP NR (New Radio), which can include allocating the OFDM carrier data bit vectors to the corresponding symbol resources.

Radio communication technologies described herein may be classified as one of a Short Range radio communication technology or Cellular Wide Area radio communication technology. Short Range radio communication technologies may include Bluetooth, WLAN (e.g., according to any IEEE 802.11 standard), and other similar radio communication technologies. Cellular Wide Area radio communication technologies may include Global System for Mobile Communications ("GSM"), Code Division Multiple Access 2000 ("CDMA2000"), Universal Mobile Telecommunications System ("UMTS"), Long Term Evolution ("LTE"), General Packet Radio Service ("GPRS"), Evolution-Data Optimized ("EV-DO"), Enhanced Data Rates for GSM Evolution ("EDGE"), High Speed Packet Access (HSPA; including High Speed Downlink Packet Access ("HSDPA"), High Speed Uplink Packet Access ("HSUPA"), HSDPA Plus ("HSDPA+"), and HSUPA Plus ("HSUPA+")), Worldwide Interoperability for Microwave Access ("WiMax") (e.g., according to an IEEE 802.16 radio communication standard, e.g., WiMax fixed or WiMax mobile), etc., and other similar radio communication technologies. Cellular Wide Area radio communication technologies also include "small cells" of such technologies, such as microcells, femtocells, and picocells. Cellular Wide Area radio communication technologies may be generally referred to herein as "cellular" communication technologies.

In the context of WLAN, the apparatuses and methods described herein may be for various wireless devices, including access points (APs) and wireless station devices (STAs), each may be equipped with radio frequency (RF) communication capabilities. These devices may incorporate transmission and reception components designed to handle RF signals within specified bandwidths and channels as described herein. The communication components typically include both hardware elements and software implementations for signal processing, enabling modulation and demodulation according to specified communication protocols. These devices may particularly be configured to operate under various wireless communication standards, including those developed by the Institute of Electrical and Electronics Engineers (IEEE) for Wi-Fi applications. The RF components, working in conjunction with antenna systems, enable communication across multiple frequency bands. These frequency bands may include, among others, the 2.4 GHz band supporting protocols such as IEEE 802.11b/g/n/ax, the 5 GHz band supporting IEEE 802.11n/ac/ax/be, and the 6 GHz band supporting newer standards like IEEE 802.11ax/be. Additional operational frequencies may extend to 60 GHz (supporting IEEE 802.11ad/ay) and 800 MHz (supporting IEEE 802.11ah), with antenna systems capable of operating at frequencies such as 28 GHz and 40 GHz. Beyond these specified standards, the devices may support emerging Wi-Fi protocols and alternative wireless communication technologies. These alternatives may include, but are not limited to, Bluetooth technology, dedicated short-range communication systems, Ultra-High Frequency applications (including IEEE 802.1 1af and IEEE 802.22), and white band frequency utilization. The RF reception chain may typically incorporate essential components such as low-noise amplifiers, signal amplification stages, analog-to-digital conversion systems, data buffering mechanisms, and digital baseband processing units, all configured to ensure effective wireless communication capabilities.

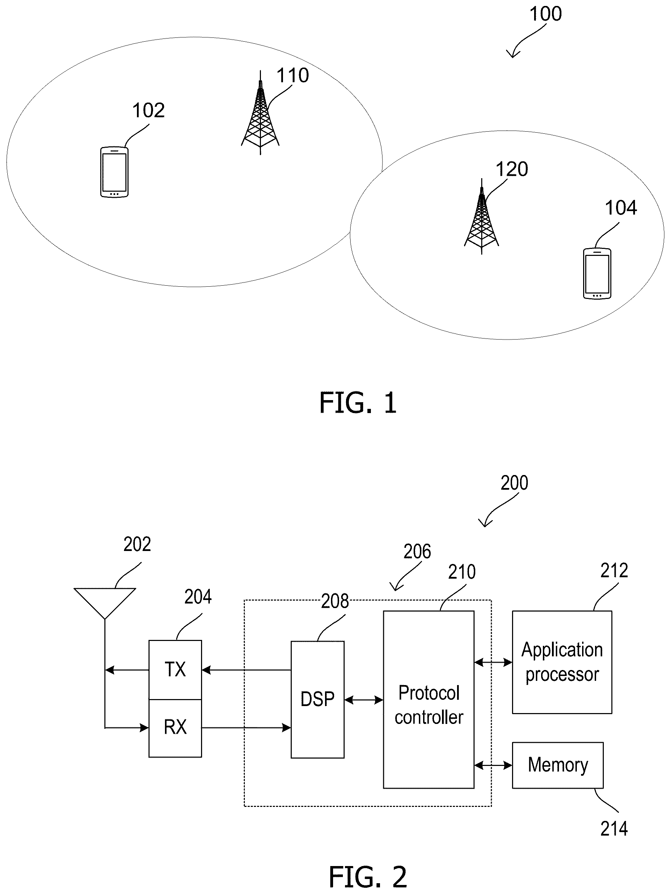

FIGs. 1 and 2 depict a general network and device architecture for wireless communications and/or sensing operations. In particular, FIG. 1 shows exemplary radio communication network 100 according to some aspects, which may include terminal devices 102 and 104 and network access nodes 110 and 120 (e.g. radio access nodes). Radio communication network 100 may communicate with terminal devices 102 and 104 via network access nodes 110 and 120 over a radio access network. Each of terminal devices 102 and 104 or network access nodes 110 and 120 may be a sensing communication device as described herein that may perform a sensing operation. Although certain examples described herein may refer to a particular radio access network context (e.g., 6G, 5G NR, LTE, UMTS, GSM, other 3rd Generation Partnership Project (3GPP) networks, WLAN/WiFi, Bluetooth, millimeter wave, etc.), these examples are demonstrative and may therefore be readily applied to any other type or configuration of the radio access network. The number of network access nodes and terminal devices in radio communication network 100 is exemplary and is scalable to any amount.

In an exemplary cellular context, network access nodes 110 and 120 may be base stations (e.g., eNodeBs, NodeBs, Base Transceiver Stations (BTSs), gNodeBs, or any other type of base station), while terminal devices 102 and 104 may be cellular terminal devices (e.g., Mobile Stations (MSs), User Equipments (UEs), or any type of cellular terminal device). Network access nodes 110 and 120 may therefore interface (e.g., via backhaul interfaces) with a cellular core network such as an Evolved Packet Core (EPC, for LTE), Core Network (CN, for UMTS), or other cellular core networks, which may also be considered part of radio communication network 100. The cellular core network may interface with one or more external data networks. In an exemplary short-range context, network access node 110 and 120 may be access points (APs, e.g., WLAN or WiFi APs), while terminal device 102 and 104 may be short-range terminal devices (e.g., stations (STAs)). Network access nodes 110 and 120 may interface (e.g., via an internal or external router) with one or more external data networks. Network access nodes 110 and 120 and terminal devices 102 and 104 may include one or multiple transmission/reception points (TRPs).

Network access nodes 110 and 120 (and, optionally, other network access nodes of radio communication network 100 not explicitly shown in FIG. 1) may accordingly provide a radio access network to terminal devices 102 and 104 (and, optionally, other terminal devices of radio communication network 100 not explicitly shown in FIG. 1). In an exemplary cellular context, the radio access network provided by network access nodes 110 and 120 may enable terminal devices 102 and 104 to wirelessly access the core network via radio communications. The core network may provide switching, routing, and transmission, for traffic data related to terminal devices 102 and 104, and may further provide access to various internal data networks (e.g., control nodes, routing nodes that transfer information between other terminal devices on radio communication network 100, etc.) and external data networks (e.g., data networks providing voice, text, multimedia (audio, video, image), and other Internet and application data). Furthermore, terminal devices 102 and 104 and network access nodes 110 and 120 may perform a sensing operation, particularly radar sensing, in accordance with JCAS architecture. In an exemplary short-range context, the radio access network provided by network access nodes 110 and 120 may provide access to internal data networks (e.g., for transferring data between terminal devices connected to radio communication network 100) and external data networks (e.g., data networks providing voice, text, multimedia (audio, video, image), and other Internet and application data).

The radio access network and core network (if applicable, such as for a cellular context) of radio communication network 100 may be governed by communication protocols that can vary depending on the specifics of radio communication network 100. Such communication protocols may define the scheduling, formatting, and routing of both user and control data traffic through radio communication network 100, which includes the transmission and reception of such data through both the radio access and core network domains of radio communication network 100. Accordingly, terminal devices 102 and 104 and network access nodes 110 and 120 may follow the defined communication protocols to transmit and receive data over the radio access network domain of radio communication network 100, while the core network may follow the defined communication protocols to route data within and outside of the core network. Exemplary communication protocols include 6G, 5G NR, LTE, UMTS, GSM, WiMAX, Bluetooth, WiFi, mmWave, etc., any of which may be applicable to radio communication network 100.

FIG. 2 shows an exemplary internal configuration of a communication device (e.g. a sensing communication device) according to various aspects described herein. The communication device may include various aspects of radio communication devices (e.g. network access nodes 110, 120) or various aspects of mobile radio communication devices (e.g. terminal device 102, 104) as well. The communication device 200 may include antenna system 202, radio frequency (RF) transceiver 204, baseband modem 206 (including digital signal processor 208 and protocol controller 210), application processor 212, and memory 214. Although not explicitly shown in FIG. 2, in some aspects communication device 200 may include one or more additional hardware and/or software components, such as processors/microprocessors, controllers/microcontrollers, other specialty or generic hardware/processors/circuits, peripheral device(s), memory, power supply, external device interface(s), subscriber identity module(s) (SIMs), user input/output devices (display(s), keypad(s), touchscreen(s), speaker(s), external button(s), camera(s), microphone(s), etc.), or other related components.

Communication device 200 may transmit and receive radio signals on one or more radio access networks. Baseband modem 206 may direct such communication functionality of communication device 200 according to the communication protocols associated with each radio access network, and may execute control over antenna system 202 and RF transceiver 204 to transmit and receive radio signals according to the formatting and scheduling parameters defined by each communication protocol. Although various practical designs may include separate communication components for each supported radio communication technology (e.g., a separate antenna, RF transceiver, digital signal processor, and controller), for purposes of conciseness the configuration of communication device 200 shown in FIG. 2 depicts only a single instance of such components.

Communication device 200 may transmit and receive wireless signals with antenna system 202. Antenna system 202 may be a single antenna or may include one or more antenna arrays that each include multiple antenna elements. For example, antenna system 202 may include an antenna array at the top of communication device 200 and a second antenna array at the bottom of communication device 200. In some aspects, antenna system 202 may additionally include analog antenna combination and/or beamforming circuitry. In the receive (RX) path, RF transceiver 204 may receive analog radio frequency signals from antenna system 202 and perform analog and digital RF front-end processing on the analog radio frequency signals to produce digital baseband samples (e.g., in-phase/quadrature (IQ) samples) to provide to baseband modem 206. RF transceiver 204 may include analog and digital reception components including amplifiers (e.g., low noise amplifiers (LNAs)), filters, RF demodulators (e.g., RF IQ demodulators), and analog-to-digital converters (ADCs), which RF transceiver 204 may utilize to convert the received radio frequency signals to digital baseband samples. In the transmit (TX) path, RF transceiver 204 may receive digital baseband samples from baseband modem 206 and perform analog and digital RF front-end processing on the digital baseband samples to produce analog radio frequency signals to provide to antenna system 202 for wireless transmission. RF transceiver 204 may thus include analog and digital transmission components including amplifiers (e.g., power amplifiers (PAs)), filters, RF modulators (e.g., RF IQ modulators), and digital-to-analog converters (DACs), which RF transceiver 204 may utilize to mix the digital baseband samples received from baseband modem 206 and produce the analog radio frequency signals for wireless transmission by antenna system 202. In some aspects, baseband modem 206 may control the radio transmission and reception of RF transceiver 204, including specifying the transmit and receive radio frequencies for operation of RF transceiver 204.

In accordance with various aspects provided herein, the communication device 200 may perform sensing operations within the radio communication network 100. Illustratively, the baseband modem 206, (e.g. the digital signal processor 208) may be configured to perform sensing-related signal processing in addition to traditional communication processing. For example, the baseband modem 206 may be configured to implement techniques like radar waveform generation, matched filtering for target detection, parameter estimation (e.g., range, velocity, angle) of detected targets, and environmental mapping. In some examples, the baseband modem 206 (e.g. the digital signal processor 208) may use its hardware accelerators and parallel processing capabilities to efficiently handle the computationally intensive sensing algorithms alongside communication tasks.

Furthermore, the baseband modem 206 (e.g. the protocol controller 210) may be configured to coordinate and/or manage joint operation of communication and sensing functions. Illustratively, the baseband modem 206 may schedule sensing and communication operations, allocate resources (e.g., time/frequency resources, antenna beams) between the sensing operations and the communication operations, and manage interference between them. The baseband modem (e.g. the protocol controller 210) may further implement sensing control protocols and interfaces to enable coordination with other network entities for distributed sensing operations as described herein.

In some examples, the application processor 212 may be configured to act as a source and sink for sensing data, similar to its role for communication data. The application processor 212 may execute sensing applications that are configured to process and interpret the sensing data received from the baseband modem 206. Illustratively, the application processor 212 may perform at least one of: object detection and tracking, environmental mapping, and/or situational awareness service using the sensing data. In some examples, the application processor 212 may interface with external sensors (e.g., cameras, lidars) to fuse data from multiple sensing modalities for enhanced perception capabilities.

Correspondingly, the RF transceiver 204 may further support the transmission and reception of sensing waveforms in addition to communication signals. Illustratively, the RF transceiver 204 may generate and transmit sensing signals (e.g., frequency-modulated continuous waveforms for radar), and may process the received sensing signals to extract target information. In some examples, the RF transceiver 204 can use the same analog and digital components (e.g., amplifiers, filters, modulators/demodulators, ADCs/DACs) for sensing operations and communication operations, potentially with additional hardware accelerators for sensing-specific tasks. Illustratively, the antenna system 202 may also support both communication and sensing functions, in some examples with separate antenna arrays or shared arrays with beamforming capabilities. In accordance with various aspects, the antenna system 202 can form narrow beams for extended sensing range or wide beams for faster coverage, depending on the sensing requirements and resource constraints. Techniques like MIMO and beamforming can be employed to enhance the sensing performance and enable features like high-resolution target parameter estimation and interference mitigation.

As shown in FIG. 2, baseband modem 206 may include digital signal processor 208, which may perform physical layer (PHY, Layer 1) transmission and reception processing to, in the transmit path, prepare outgoing transmit data provided by protocol controller 210 for transmission via RF transceiver 204, and, in the receive path, prepare incoming received data provided by RF transceiver 204 for processing by protocol controller 210. Digital signal processor 208 may be configured to perform one or more of error detection, forward error correction encoding/decoding, channel coding and interleaving, channel modulation/demodulation, physical channel mapping, radio measurement and search, frequency and time synchronization, antenna diversity processing, power control and weighting, rate matching/de-matching, retransmission processing, interference cancelation, and any other physical layer processing functions. Digital signal processor 208 may be structurally realized as hardware components (e.g., as one or more digitally-configured hardware circuits or field programmable gate arrays (FPGAs)), software-defined components (e.g., one or more processors configured to execute program code defining arithmetic, control, and I/O instructions (e.g., software and/or firmware) stored in a non-transitory computer-readable storage medium), or as a combination of hardware and software components. In some aspects, digital signal processor 208 may include one or more processors configured to retrieve and execute program code that defines control and processing logic for physical layer processing operations. In some aspects, digital signal processor 208 may execute processing functions with software via the execution of executable instructions. In some aspects, digital signal processor 208 may include one or more dedicated hardware circuits (e.g., application specific integrated circuits (ASICs), field programmable gate arrays, and other hardware) that are digitally configured to specific execute processing functions, where the one or more processors of digital signal processor 208 may offload certain processing tasks to these dedicated hardware circuits, which are known as hardware accelerators. Exemplary hardware accelerators can include fast Fourier transform (FFT) circuits and encoder/decoder circuits. In some aspects, the processor and hardware accelerator components of digital signal processor 208 may be realized as a coupled integrated circuit.

Communication device 200 may be configured to operate according to one or more radio communication technologies. Digital signal processor 208 may be responsible for lower-layer processing functions (e.g., layer 1/PHY) of the radio communication technologies, while protocol controller 210 may be responsible for upper-layer protocol stack functions (e.g., data link layer/layer 2 and/or network layer/layer 3). Protocol controller 210 may thus be responsible for controlling the radio communication components of communication device 200 (antenna system 202, RF transceiver 204, and digital signal processor 208) in accordance with the communication protocols of each supported radio communication technology, and accordingly may represent the access stratum (AS) and non-access stratum (NAS) (also encompassing Layer 2 and Layer 3) of each supported radio communication technology. Protocol controller 210 may be structurally embodied as a protocol processor configured to execute protocol stack software (retrieved from a controller memory) and subsequently control the radio communication components of communication device 200 to transmit and receive communication signals in accordance with the corresponding protocol stack control logic defined in the protocol software. Protocol controller 210 may include one or more processors configured to retrieve and execute program code that defines the upper-layer protocol stack logic for one or more radio communication technologies, which can include data link layer/layer 2 and network layer/layer 3 functions. Protocol controller 210 may be configured to perform both user-plane and control-plane functions to facilitate the transfer of application layer data to and from radio communication device 200 according to the specific protocols of the supported radio communication technology. User-plane functions can include header compression and encapsulation, security, error checking and correction, channel multiplexing, scheduling, and priority, while control-plane functions may include setup and maintenance of radio bearers. The program code retrieved and executed by protocol controller 210 may include executable instructions that define the logic of such functions.

Communication device 200 may also include application processor 212 and memory 214. Application processor 212 may be a CPU and may be configured to handle the layers above the protocol stack, including the transport and application layers. Application processor 212 may be configured to execute various applications and/or programs of communication device 200 at an application layer of communication device 200, such as an operating system (OS), a user interface (UI) for supporting user interaction with communication device 200, and/or various user applications. The application processor may interface with baseband modem 206 and act as a source (in the transmit path) and a sink (in the receive path) for user data, such as voice data, audio/video/image data, messaging data, application data, basic Internet/web access data, etc. In the transmit path, protocol controller 210 may therefore receive and process outgoing data provided by application processor 212 according to the layer-specific functions of the protocol stack, and provide the resulting data to digital signal processor 208. Digital signal processor 208 may then perform physical layer processing on the received data to produce digital baseband samples, which digital signal processor may provide to RF transceiver 204. RF transceiver 204 may then process the digital baseband samples to convert the digital baseband samples to analog RF signals, which RF transceiver 204 may wirelessly transmit via antenna system 202. In the receive path, RF transceiver 204 may receive analog RF signals from antenna system 202 and process the analog RF signals to obtain digital baseband samples. RF transceiver 204 may provide the digital baseband samples to digital signal processor 208, which may perform physical layer processing on the digital baseband samples. Digital signal processor 208 may then provide the resulting data to protocol controller 210, which may process the resulting data according to the layer-specific functions of the protocol stack and provide the resulting incoming data to application processor 212. Application processor 212 may then handle the incoming data at the application layer, which can include execution of one or more application programs with the data and/or presentation of the data to a user via a user interface.

Memory 214 may embody a memory component of communication device 200, such as a hard drive or another such permanent memory device. Although not explicitly depicted in FIG. 2, the various other components of communication device 200 shown in FIG. 2 may additionally each include integrated permanent and non-permanent memory components, such as for storing software program code, buffering data, etc.

In accordance with some radio communication networks, terminal devices 102 and 104 may execute mobility procedures to connect to, disconnect from, and switch between available network access nodes of the radio access network of radio communication network 100. As each network access node of radio communication network 100 may have a specific coverage area, terminal devices 102 and 104 may be configured to select and re-select available network access nodes to maintain a strong radio access connection with the radio access network of radio communication network 100. For example, terminal device 102 may establish a radio access connection with network access node 110 while terminal device 104 may establish a radio access connection with network access node 112.

In the event the current radio access connection degrades, terminal devices 102 or 104 may seek a new radio access connection with another network access node of radio communication network 100. For example, terminal device 104 may move from the coverage area of network access node 112 into the coverage area of network access node 110. As a result, the radio access connection with network access node 112 may degrade, which terminal device 104 may detect via radio measurements such as signal strength or signal quality measurements of network access node 112.

Depending on the mobility procedures defined in the appropriate network protocols for radio communication network 100, terminal device 104 may seek a new radio access connection (which may be, for example, triggered at terminal device 104 or by the radio access network), such as by performing radio measurements on neighboring network access nodes to determine whether any neighboring network access nodes can provide a suitable radio access connection. As terminal device 104 may have moved into the coverage area of network access node 110, terminal device 104 may identify network access node 110 (which may be selected by terminal device 104 or selected by the radio access network) and transfer to a new radio access connection with network access node 110. Such mobility procedures, including radio measurements, cell selection/reselection, and handover are established in the various network protocols and may be employed by terminal devices and the radio access network in order to maintain strong radio access connections between each terminal device and the radio access network across any number of different radio access network scenarios.

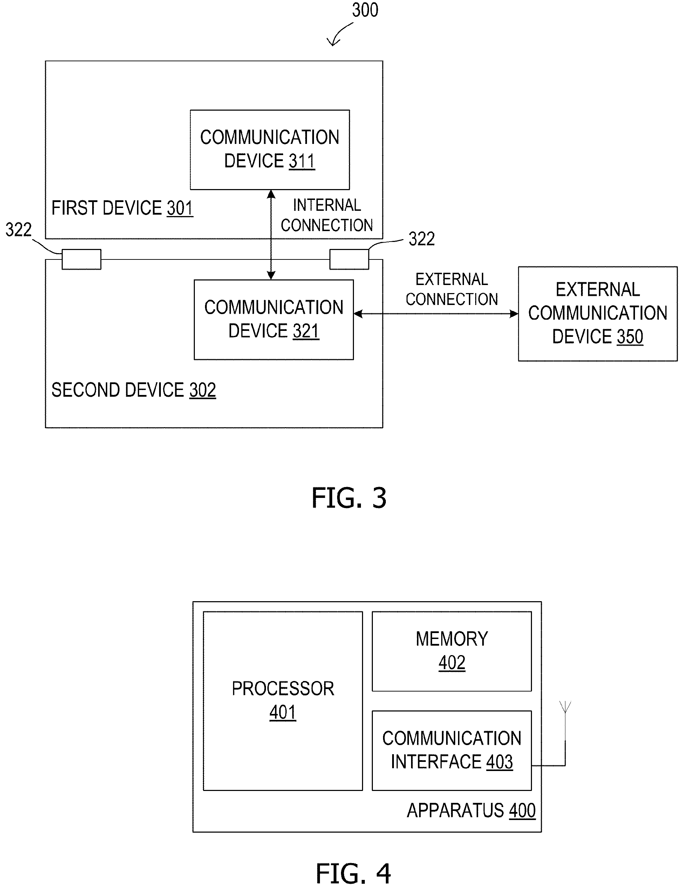

FIG. 3 shows a communication network including a multi-processor system 300 and an external communication device 350 that is external to the multi-processor system 300 (i.e. external to the devices of the multi-processor system. Illustratively, the multi-processor system may be implemented as a dual-system-on-chip 2-in-1 device. This system may integrate two distinct devices, each with its own processor and communication circuit (e.g. interface (e.g. communication interface)), into a single cohesive unit. The multi-processor system 300 may be configured to allow both devices to work together by sharing resources and managing tasks efficiently. The multi-processor system 300 may include both active and passive radio communication circuits to enable dynamic management of wireless communications depending on the state of each device.

In this configuration, the multi-processor system 300 may facilitate communication between the first device 301 and the second device 302, as well as with external devices such as the external communication device 350. The internal connection between the two devices may enable resource sharing, while the external connection allows for interaction with external networks or devices. In some examples, the internal connection between the first device 301 and the second device 302 can be established using either a physical wired connection or a wireless connection. Both connection types may facilitate communication, resource sharing, and task management between the first device 301 and the second device 302.

The first device 301 of the multi-processor system 300 may be any type of electronic device including a communication device 311 that is configured to communicate with other devices. Illustratively, the first device 301 may be a tablet or another portable computing device. The first device 301 may attach to the second device 302 via an attaching element 322 to form the multi-processor system 300. The first device 301 may include the communication device 311, which may operate in a passive mode when it is not actively engaged in communication tasks. This allows the first device to contribute to overall system performance even when it is idle. The first device 301 may be the device of the multi-processor system 300 assisting with tasks such as channel measurements or interference detection when it is not actively communicating as described herein. The internal connection between the first and second devices may enable efficient resource sharing, allowing the first device 301 to support active communication tasks handled by the second device as described herein.

The second device 302 in the multi-processor system 300 may also be any type of electronic device including a communication device 321 that is configured to communicate with other devices. Illustratively, the second device 302 may be a computing device such as a laptop or desktop computer having a user input device such as a keyboard and a mouse pad. The second device 302 may connect to the first device 301 via the internal connection. The second device 302 may connect to the external communication device 350 via an external connection, which may be maintained simultaneously with the internal connection. The second device 302 may include an active communication circuit 321, which may handle real-time wireless communications with external devices or networks. The second device 302 may maintain network connectivity and ensure reliable data transmission within the multi-processor system 300. In some examples, the second device 302 may rely on data provided by the first device's communication device 311 to optimize channel selection or mitigate interference during communications with external devices. The second device 302 may attach to the first device 302 via an attaching element 322 to form the multi-processor system 300.

It is to be recognized that the first device 301 and the second device 302 are exemplified herein as a tablet and a laptop computer respectively to illustrate the multi-processor system 300 as a system having multiple devices. These multiple devices may perform communication operations independently of each other under the control of their respective processors. Also, in this constellation, the first device 301 may operate in a mode in which its communication device 311 is idle and the second device 302 may operate in a mode in which its communication device 321 is active, as illustrated herein to show the presence of different operational modes for communication at the same time. The skilled person would recognize that these are provided illustratively and the first device 301 may perform any operations and have any configurations described for the second device 302 and vice versa.

The first communication device 311, which may be integrated into the first device 301, may include a respective processor (e.g. processors 206, 208, 210, 212) and a respective radio communication circuit (e.g. 202, 204). The radio communication circuit and/or the processor of the first communication device 311 may operate in an idle mode, for example when not actively engaged in communication tasks. However, even in this passive state, the first communication device 311 may perform various functions described herein, such as monitoring network conditions or performing channel measurements.

The second communication device 321, which may be integrated into the second device 302 may include a respective processor (e.g. processors 206, 208, 210, 212) and a respective radio communication circuit (e.g. 202, 204). In this illustrative example, the radio communication circuit and/or the processor of the second communication device 311 may operate in an active mode. In an active mode, the second communication device 321 may handle ongoing wireless communications with external devices or networks in real-time. The second communication device 321 may maintain reliable connectivity within the multi-processor system 300 by managing data transmissions and ensuring that communications are optimized based on current network conditions. The active mode of the second communication device 321 may allow handling real-time communications by the second communication device 321 while also receiving data from other components within the multi-processor system 300, such as channel measurement results from the first communication device 311. This dynamic interaction between components may enable more flexible management of wireless resources within complex networks, and allow for real-time adjustments based on changing conditions.

One or more attaching elements 322 may physically attach the first device 301 with the second device 302 within the multi-processor system 300. This attaching element may allow for integration between these two devices, enabling them to function as a cohesive unit rather than two independent systems. By connecting these two devices through one or more attaching elements 322, resources such as processing power and communication circuits can be shared between them, allowing for more efficient management of tasks across both devices. The one or more attaching elements 322 may facilitate collaboration between devices within the multi-processor system by enabling close physical proximity and resource sharing. In some examples, the one or more attaching elements 322 may further include an interface to share electrical signals, which may be power signals to supply power from one of the devices to the another. In some examples, the one or more attaching elements 322 may further include a data interface to share data signals for data exchange. In some examples, the internal connection may be facilitated with a wired electrical connection included by the one or more attaching elements.

The network may further include the external communication device 350, which may operate outside of both devices within the multi-processor system 300 but may communicate with them via their respective radio circuits 311 and 312. This external communication device 350 could be any type of wireless-enabled equipment-such as a router, access point, or another computing device-operating within a shared network environment. The interaction between the external communication device 350 and the first and second communication devices 311, 321 may allow for dynamic adjustments in how wireless communications are managed within complex networks involving multiple devices. For instance, based on data provided by the first communication device 311 regarding channel conditions or interference levels, the second communication device 321 may adjust its transmission parameters when communicating with the external communication device 350 as described herein.

FIG. 4 shows an illustrative example of an apparatus in accordance with various aspects described herein. A communication device (e.g. the communication device 200) may include the apparatus 400. Illustratively, the communication device may be a network access node 110, 120, or a terminal device 102, 104. In an example, the multi-processor system 300 includes the apparatus 400. In accordance with some aspects described herein, the communication device including the apparatus 400 may be the first communication device 311 described in accordance with FIG. 3. In accordance with some other aspects described herein, the communication device including the apparatus 400 may be the second communication device 311 described in accordance with FIG. 3. This is to be taken for illustrative purposes and, as already described in accordance with FIG. 3, the first device 301 may perform any operations and have any configurations described for the second device 302 and vice versa.

The apparatus 400 may include a processor 401 (e.g. processors ), a memory 402, and an interface (e.g. communication interface 403 (e.g. an RF interface)) configured to receive and transmit communication signals in order to communicate with further entities within the radio access network. In some aspects, the communication interface 403 may include one or more signal paths to carry communication signals. The communication interface 403 may include one or more transceivers. The communication interface 403 may include one or more antenna ports to couple one or more antennas of the communication device.

The processor 401 may include one or more processors, which may include a baseband processor and an application processor (e.g. application processor 212, baseband modem 206). In various examples, the processor 401 may include a central processing unit, a graphics processing unit, a hardware acceleration unit, a neuromorphic chip, and/or a controller. The processor 401 may be implemented in one processing unit, e.g. a system on chip (SOC), or on multiple processor circuitries. In accordance with various examples, the processor 401 may further provide further functions to process received communication signals. The memory 402 (e.g. memory 214) may store various types of information required for the processor 401, or the communication interface 403 to operate in accordance with various aspects described herein.

The communication interface 403 may include one or more components allowing the processor 401 to communicate with further communication devices, such as the external communication device 350 and the other communication device (e.g. the first communication device 311 or the second communication device 321) of the multi-processor system 300. The communication interface 403 may include a transceiver (e.g. RF transceiver 204) configured to transmit and receive radio communication signals within a designated frequency band. Illustratively, a communication signal may have a designated channel bandwidth within the designated frequency band. The communication interface 403 may communicate with the further communication devices over established connections (i.e. links), such as the external connection and the internal connection as described in accordance with FIG. 3.

In an example, the internal connection may be a physical wired connection. Illustratively, when the first device 301 and the second device 302 are physically attached to each other via one or more attaching elements (e.g., docking mechanisms, magnetic connectors, or mechanical latches), a wired connection may be established. This wired connection may include one or more various physical interfaces. The processor 301 and the communication interface 303 may be configured to facilitate the physical interface and communicate through the physical interface with the other communication device of the multi-boot system 300.

For example, a physical interface may be a high-speed data bus, such as USB-C, thunderbolt, or a proprietary interface to facilitate high-bandwidth communication between the first communication device 311 (in the first device 301) and the second communication device 312 (in the second device 302). Another physical interface may be a power delivery interface, which the wired connection may also include a power delivery interface that allows one device (e.g., second device 302) to supply power to the other device (e.g., first device 301) when attached, in addition to data transfer. The physical interface may further include a peripheral sharing interface which may support peripheral sharing by enabling the first and second devices to access shared resources such as input/output devices (e.g., keyboards, touchpads), storage units, or external displays. Illustratively, the physical interface may include a shared I/O bus that allows both processors (i.e. the processor 301 and the processor of the other communication device of the multi-processor system) to communicate with peripherals seamlessly. In some examples, the physical interface may be configured for one or more inter-processor communication protocols, through which the processors of both devices may communicate with each other via standard inter-processor communication protocols such as inter-integrated circuit (I2C), serial peripheral interface (SPI), or peripheral component interconnect express (PCIe), depending on the required data throughput and latency.

In an example, the internal connection may be a wireless connection. For example, when the first device 301 and second device 302 are not physically attached but still need to communicate, a wireless connection may be established between their respective communication interfaces of the first and second device of the multi-boot system 300. In some examples, the wireless connection may be present even the first device 301 and the second device 302 are physically attached to each other in the multi-processor system 300.

This wireless connection can be implemented using various wireless technologies. For example, one of the wireless technologies may include Wi-Fi Direct or Bluetooth, through which the wireless connection may utilize short-range wireless technologies such as Wi-Fi Direct or Bluetooth to establish a peer-to-peer link between the two devices. In an example, one of the wireless technologies may include an ad-hoc wireless network, in which the first and second devices may form an ad-hoc wireless network, where both devices act as nodes in a local network.

In accordance with various aspects described herein, the processor 401 may manage wireless communications dynamically based on its operational state. In an example, when detached, each processor of the first and second communication devices 311, 321 respectively may manage its own wireless communications independently.

For example, in a first operation mode (e.g. when the devices are attached and illustratively for the processor 401 being the processor of the second device 302), the processor 401 may take over all wireless communications (e.g., Wi-Fi and Bluetooth) of the multi-processor system 300, while the other processor of the other communication device of the multi-processor system 300 remains idle. In a second operation mode (e.g. when the devices are not attached and illustratively for the processor 401 being the processor of the second device 302), the processor 401 may control only wireless communications of the second device 302.

From another perspective, for example, in a first operation mode (e.g. when the devices are attached and illustratively for the processor 401 being the processor of the first device 301), the processor 401 may operate in a low power mode and remain idle while the processor of the second device 302 takes over all wireless communications of the multi-processor system 300, while the other processor of the other communication device of the multi-processor system 300 remains idle. In a second operation mode (e.g. when the devices are not attached and illustratively for the processor 401 being the processor of the first device 301), the processor 401 may control wireless communications of the first device 301.

In some examples, the processor 401 may be configured with specific modes depending on whether the first device 301 and the second device 302 are connected via wired or wireless means as the internal connection. For example, in wired mode, while the processor 401 may act as the primary controller for managing external communications (e.g., handling Wi-Fi/Bluetooth traffic), while the other processor focuses on internal tasks such as managing local applications or interacting with shared peripherals. In wireless mode, the processor 401 may operate independently but may coordinate with its counterpart through periodic synchronization messages over Wi-Fi Direct or Bluetooth links.

In a first aspect with the example of the processor 401 being the processor of the second device 302, the processor may determine a result representing whether a first further communication device is in an idle mode. In some examples, the first further communication device is the first device 301 and aspects described herein for the example that the first further communication device is the first device 301 for brevity. In some examples, the processor may assess various factors, such as network activity or power consumption, to make this determination. For example, when the first device 301 is not actively engaged in data transmission or reception, it may enter an idle mode to conserve power. The processor 401 may monitor signals from the first communication device 311 to assess whether it has transitioned into this state. In some cases, this determination may also involve monitoring traffic patterns or power levels associated with the radio communication circuit of the first device 301. In some examples, the processor 401 may determine the result based on information received from the first device 301. Illustratively, the received information may indicate that the first device 301, the first communication device 311 or the radio communication circuit of the first communication device 311 has entered or about to enter into the idle mode.

Based on the result (e.g. once the processor 401 determines that the first device 301 is in an idle mode), the processor 401 may instruct this device to perform channel measurements. These measurements may provide real-time data about network conditions, such as signal strength or interference levels. For instance, in a scenario where the second device 302 is actively communicating with an external access point (e.g., external communication device 350), the processor 401 may determine which channels have less interference or stronger signals. Illustratively, a channel measurement process at the first device 301 may involve scanning multiple frequency bands and collecting metrics such as received signal strength indicator (RSSI), signal-to-noise ratio (SNR), and bit error rate (BER). These metrics may provide insights into which channels offer optimal conditions for data transmission. Correspondingly, the first device 301 may send channel measurement results, which may include one or more of these metrics.

In accordance with various aspects described herein, the processor 401 may instruct the first device 301 to perform channel measurements by encoding information to be transmitted to the first communication device 311 via the internal connection, which may be a wired physical connection or a wireless connection. The encoded information may indicate to the first communication device 311 to perform channel measurements. In some examples, the encoded information may further include channel identifiers indicating the channels to be measured or measurement time information indicating a period of time to perform the measurements.

The processor 401 may obtain channel measurement results, illustratively after instructing the first device 301 to perform channel measurements. The processor 401 may obtain these results via the communication interface 403. The processor 401 may decode information received from the first device 301 via the internal connection to obtain the channel measurement results. Furthermore, the processor 401 may process and analyzed the channel measurement results to determine how best to configure communications between the second device 302 and external devices like the external communication device 350. The process of obtaining channel measurement results may include receiving raw data from the first communication device 311 and interpreting the raw data using algorithms stored in memory 402. The processor 401 may also compare these results against historical data or predefined thresholds to identify trends or anomalies that could impact network performance. For example, if channel measurements indicate that certain frequency bands are experiencing high levels of interference, the processor 401 may flag these channels as unsuitable for future communications. Conversely, if measurements show that specific channels offer strong signal strength and low interference, the processor 401 may prioritize these channels for use.

The processor 401 may further configure the communication interface 403 with a configuration based on these results, illustratively once channel measurement results have been obtained and analyzed. This configuration may allow that communications between the second further communication device (e.g., external access point 350) and the second device 302 are optimized for current network conditions indicated by the obtained channel measurement results. In accordance with various aspects described herein, the configuration process may involve adjusting parameters such as frequency band selection, transmission power levels, and modulation schemes according to the channel measurement results.

For instance, if channel measurements indicate that certain bands offer better performance than others, the processor 401 may select those bands for future transmissions to improve data throughput and reduce latency. In some cases, this configuration process may also involve coordinating with other devices within the network to ensure that resources are allocated efficiently across all connected entities. For example, if multiple devices are competing for access to limited bandwidth on a shared network link, the processor 401 may prioritize certain devices based on their current activity levels or quality-of-service requirements. The technical effect of these operations is improved resource utilization within the multi-processor system. By leveraging idle devices for tasks such as channel measurements, the system can gather valuable data without interrupting ongoing communications handled by active devices. In some examples, the memory 402 may store data related to channel measurements performed by idle devices like the first device 301 during periods where they aren't actively engaged themselves but still contribute indirectly through auxiliary roles instead.

In an example, before obtaining the channel measurement results from the first device 301, the communication interface 403 may be configured to communicate with the external communication device 350 according to a further configuration that is different from the configuration that is determined based on channel measurement results. In this context, the processor 401 may initially configure the communication interface 403 with a default or preestablished configuration to maintain communication with external devices while awaiting channel measurement results.

For example, when the first device 301 is idle and begins performing channel measurements, the second device 302 may continue communicating with an external access point (e.g., external communication device 350) using a default communication channel. Once the channel measurement results are obtained and analyzed, the processor 401 may then reconfigure the communication interface 403 to switch to an optimized configuration based on real-time network conditions indicated by the channel measurement results.

In an example, the further configuration may include a communication with the second further communication device via a first radio communication channel, and the processor 401 may determine a second radio communication channel based on the channel measurements performed by the first device 301. Once these measurements are obtained, the processor 401 may configure the communication interface 403 to communicate via this second radio communication channel. In this example, while awaiting updated channel measurement results from the first device 301, the second device 302 may still communicate with external devices using a predefined or default radio communication channel. The processor 401 may monitor ongoing communications and ensure that they remain stable during this period. Once channel measurements are received from the first device, which may include metrics such as RSSI, SNR, or BER, the processor 401 may analyze these metrics to identify the second radio communication channel that offers better performance. The processor 401 may then reconfigure the communication interface 403 to switch from the first radio communication channel to this second, optimized channel.

In an example, before obtaining channel measurement results from the first device 301, the communication interface 403 may be configured to communicate with a first network access node according to a further configuration. The second further communication device in this case corresponds to a second network access node. In this example, while awaiting updated channel measurement results from the first device 301, communications between the second device 302 and external network nodes (e.g. the first network access node) may be conducted using a predefined or default configuration.

Once updated channel measurement results are received from the first device 301, which may include information about available network access nodes or their respective signal strengths and interference levels, the processor 401 may analyze these results to determine whether switching to a second network access node would provide better performance. If so, the processor 401 may reconfigure the communication interface 404 accordingly. For example, if initial communications are established with the first network access node but channel measurement results indicate that second network access node offers stronger signal strength or lower interference, the processor 401 may instruct a handover from the first access node to the second access node once optimal conditions have been confirmed.

In an example, once updated channel measurement results are received from the first device 301, the processor 401 may select a suitable network access node from among available options based on these results. In this example, after instructing the first device 301 to perform channel measurements across multiple frequency bands or access nodes, the obtained channel measurement results may provide detailed information about which network access nodes offer optimal conditions for future communications. The processor 401 may analyze these metrics-e.g. RSSI values or interference levels-to select an appropriate node for future transmissions.

Correspondingly, the processor 401 may further instruct the communication interface 403 to perform a handover from a first network access node to a second network access node based on the channel measurement results obtained from the first device 301. The handover process may involve several intermediate steps. First, the processor 401 may verify that the second network access node is available and capable of handling ongoing communications. Furthermore, the processor 401 may establish a connection with the second network access node, in some examples while maintaining the existing connection with the first network access node. Finally, once the new connection is stable, the processor 401 may instruct the communication interface 403 to switch all active communications to the second network access node and terminate the connection with the first node.

In some examples, the channel measurement results obtained from the first device 301 may include one or more metrics such as RSSI, SNR, BER, or HARQ metrics. These metrics may provide detailed insights into network conditions and help guide decisions about how best to configure communications between devices. The processor 401 may use these metrics to assess which channels offer optimal conditions for data transmission. Illustratively, RSSI can provide an indication of signal strength, allowing the processor 401 to identify channels with strong signals. SNR may indicate the ratio of signal power to noise power, helping identify channels with minimal interference. BER may indicate how many bits are received incorrectly over a given period of time, providing insights into channel reliability. HARQ metrics may provide information about error correction performance, helping assess how efficiently data can be retransmitted in case of errors.

Once one or more of these metrics are obtained from channel measurements performed by the first device 301, the processor 401 may analyze them to determine which channels offer optimal conditions for future communications. For example, if RSSI and SNR values indicate that channel A offers strong signal strength and low interference while BER and HARQ metrics suggest that channel B has higher error rates, channel A may be selected for future transmissions.

In some examples, the processor 401 may provide channel measurement results to a trained artificial intelligence and/or machine learning model. This trained artificial intelligence and/or machine learning model may be configured to determine an output representing at least one of a radio communication channel or a candidate network access node. The processor 401 may then determine how to configure communications based on this output. In this example, after receiving channel measurement results from the first device 301, the processor 401 may feed these results into an artificial intelligence and/or machine learning model stored in memory 402 or executed remotely on another computing platform. The artificial intelligence and/or machine learning model may analyze these results in conjunction with historical data or learned patterns to predict which channels or network nodes will offer optimal performance under current conditions.

For example, the artificial intelligence and/or machine learning model may analyze at least one of the RSSI, SNR, BER, and HARQ metrics collected by the first communication device 311 and predict which radio communication channels will provide minimal interference and strong signal strength. Alternatively, if multiple network access nodes are available within range of the communication interface 403, the processor 401 may predict which network access node will offer better connectivity based on current traffic loads or historical performance data. Accordingly, the artificial intelligence and/or machine learning model may generate an output indicating either an optimal radio communication channel or a preferred network access node. The processor 401 may then configure its communication interface accordingly-whether by switching channels or initiating handovers between nodes-based on recommendations provided by artificial intelligence and/or machine learning model

In an example, the artificial intelligence and/or machine learning model may be configured to determine an output based on the provided channel measurements results as the input, which the output may include radio communication channel assignments for a network access node (e.g. the external communication device 350) to communicate with other communication devices within the network. The processor 401 may encode information representing these channel assignments and transmit this information to the second further communication device. In this example, the artificial intelligence and/or machine learning model may be trained to analyze the input and predict optimal channel assignments for network access nodes. Illustratively, the artificial intelligence and/or machine learning model may consider various factors, including current traffic loads, historical performance data, and interference levels, to determine which channels will provide the best performance for communications between the network access node and other devices within the network.

For example, if the external communication device 350 is a Wi-Fi access point managing multiple connected devices, the artificial intelligence and/or machine learning model may analyze the channel measurement data collected by the first device 301 and recommend specific channels that offer minimal interference and strong signal strength. The processor 401 may then encode this information into a format suitable for transmission and send it to the external communication device 350, instructing the external communication device to adjust its channel assignments accordingly. This approach may allow for dynamic optimization of network resources without requiring manual intervention from users or network administrators. By leveraging real-time data collected by idle devices within the multi-processor system (e.g., first device 301) and applying an artificial intelligence-driven analysis, the processor 401 may ensure that network access nodes are always operating on optimal channels, thereby improving overall network performance.

In some examples, the trained artificial intelligence and/or machine learning model may further be configured to determine its output, as described herein, based on user information representative of received user feedback about the network, including feedback about the communication device, which may add an extra layer of adaptability by incorporating user-reported issues into the decision-making process. In this example, users may provide feedback about their network experience through a dedicated interface or application. This feedback could include reports of slow internet speeds, dropped connections, or areas within their home or office where Wi-Fi coverage is weak. The artificial intelligence and/or machine learning model may take this user feedback into account when determining optimal channel assignments or other configuration parameters. Illustratively, if multiple users report poor connectivity in certain areas of their home network, the artificial intelligence and/or machine learning model may prioritize assigning channels with stronger signal strength or lower interference in those areas. Alternatively, or additionally, if users report frequent disconnections or high latency when using specific devices, the artificial intelligence and/or machine learning model may adjust channel assignments or bandwidth allocations to ensure that those devices receive priority access to network resources.

The processor 401 may collect user feedback from various sources (e.g., mobile apps or web interfaces) and provide the collected user feedback to the artificial intelligence and/or machine learning model for analysis. Once the artificial intelligence and/or machine learning model generates its output based on both real-time channel measurement data and user feedback, the processor may encode this information and transmit the information to the relevant network access nodes (e.g., external communication device 350) for implementation. By allowing users to report issues directly and having those reports influence how the processor 401 configures its communications to optimize the network performance not only based on technical metrics but also on actual user experiences.

In an example, the processor 401 may instruct the apparatus 400 (e.g. the second communication device 321) to operate as a relay between the first device 301 and the external communication device 350 to enable the second communication device 321 to act as an intermediary for communications between the first communication device 311 and the external communication device 350. In this example, if a direct communication between the first communication device 311 and the external communication device 350 is not possible due to distance or interference issues, the second communication device 321 within the multi-processor system 300 can act as a relay.

For example, if the first device 301 is located too far from external communication device 350 to establish a direct connection with strong signal strength, but second device 302 is positioned closer to both of these devices, second device 302 may serve as a relay. In this case, the second communication device 321 may receive data from the first device 301 via an internal connection (e.g., wired or wireless) and forwards it to external communication device 350 via the external connection.

The processor 401 may control the relay operation by monitoring signal strength and determining when relaying communications would improve performance. The processor may then configure both internal and external connections accordingly so that data can be transmitted seamlessly between the first communication device 311 and the external communication device 350 to improve coverage and connectivity within complex networks where direct communication between certain devices may not always be feasible due to physical barriers or signal degradation.

In an example, the processor may predict future radio communication conditions based on channel measurement results obtained from the first device 301. The processor 401 may then determine how best to configure communications with external devices based on these predicted conditions. In this scenario, after receiving real-time channel measurement results from idle devices like the first device 301, the processor 401 may analyze these results alongside historical data stored in memory 402. Using predictive algorithms, which may involve the use of the trained artificial intelligence and/or machine learning, the processor 401 may forecast how radio conditions are likely to change over time. For example, if measurement results indicate increasing interference on certain channels during specific times of day (e.g., due to nearby Wi-Fi networks becoming active), the predictive analysis may suggest switching channels preemptively before performance degrades. Similarly, if historical data indicates that certain access points become congested at peak usage hours but offer better performance during off-peak times, the predictive analysis may recommend adjusting connection priorities accordingly.

In an example, the processor 401 may instruct the first device 301 to perform channel measurements periodically or at designated intervals, which may allow the apparatus 400 to gather real-time data about network conditions at regular intervals. In this example, the processor 401 may initiate channel measurements on the first device 301 at predefined time intervals, such as every few seconds or minutes, depending on the specific network requirements. For example, the first device 301 may be instructed to perform channel measurements every 30 seconds. During each measurement cycle, the first communication device may scan available channels and collect data on signal strength and interference levels to generate the channel measurement results. If the processor 401 detects that a particular channel has become congested or that signal strength has weakened, the processor 401 may reconfigure the communication interface 403 to switch to a less congested channel.

In some examples, the communication interface 403 may include a first communication interface configured to communicate with the first device 301 and a second communication interface configured to communicate with the external communication device 350 simultaneously. In this example, the communication interface 403 may include two separate transceivers or signal paths-one dedicated to communicating with the first device 301 and another dedicated to communicating with the external communication device 350. These transceivers can operate independently of each other to allow the second communication device 321 to maintain simultaneous connections with both internal and external devices without interference.

In accordance with various aspects described herein, the communication interface 403 may operate according to an IEEE 802.11-based communication protocol and maintain the internal connection as an established direct connection with the first device 301 while also maintaining an established connection with the external communication device 350. In this context, the communication interface 403 may include multiple transceivers or signal paths, each dedicated to maintaining a connection with a different device. For example, one transceiver may be dedicated to communicating with the first device 301 using the internal connection, while another transceiver handles communications with the external communication device 350 over the external connection.

The IEEE 802.11-based protocol may illustratively provide compatibility with existing Wi-Fi infrastructure. This protocol may support a variety of communication modes, including peer-to-peer (P2P) connections like Wi-Fi Direct, which may enable devices to communicate directly without requiring a traditional access point (AP). In this example, the first device 301 and second device 302 may communicate directly using Wi-Fi Direct while the second device 302 maintains a separate connection with an external AP or network node. For example, the second device 302 may be actively communicating with the external communication device 350 that is an AP to access the internet or transfer data. Simultaneously, the internal connection is maintained with the first device 301 to receive channel measurement results or other auxiliary data.

In a Wi-Fi Direct implementation, the first device 301 and the second device 302 may connect directly to each other without needing a traditional AP, which may be particularly useful for exchange of the channel measurement results. The first device 301 and the second device 302 may use a discovery mechanism to find each other, which may include scanning for available devices and advertising their presence. Once they discover each other, the processor 401 may configure the communication interface 403 to form a P2P Group, in which the second communication device 321 may act as the group owner (GO), similar to an AP, while the first communication device 311 may act as a client.

While the GO acts as the central coordinator for the P2P group, managing connections and data flow, the client may connect to the GO and communicate through the GO. While the first communication device 311 and the second communication device 321 communicate directly, the second communication device 311 may also be connected to the external communication device 350 simultaneously, allowing for internet sharing.

The processor 401 may instruct the communication interface 403 to operate in a soft access point (softAP) mode. Illustratively, the processor 401 may manage group ownership responsibilities for coordinating communications between multiple devices within the P2P group, in which the processor 401 may perform the management, such as resource sharing between devices, through concurrent medium access control (MAC) operations. In this context, when operating in P2P mode-such as Wi-Fi Direct-the processor 401 may perform operations similar to those of an access point in traditional Wi-Fi networks and manage connections between the second communication devices 321 and the first communication device 311 within the P2P group. Concurrent MAC operations may allow both the communication interface 404 and the communication interface of the first communication device 311 to operate simultaneously without interference. For instance, the processor may be configured such that while one MAC interface may handle ongoing communications with external networks via BSS (Basic Service Set) MAC protocols, another MAC interface may handle internal P2P communications via GO MAC protocols.

With the above-mentioned Wi-Fi Direct implementation, the first communication device 311 may connect to the MAC layer of the GO implemented by the processor 401. Correspondingly, the processor 401 may identify the first communication device 311 and register it to perform operations described herein. Illustratively, the processor 401 and the processor of the first communication device 311 may perform all handshakes required between the communication devices (e.g. by respective network interface cards (NICs) or circuits. In some examples, any information described herein to be exchanged between the first communication device 311 and the processor 401 may be exchanged at the MAC layer.

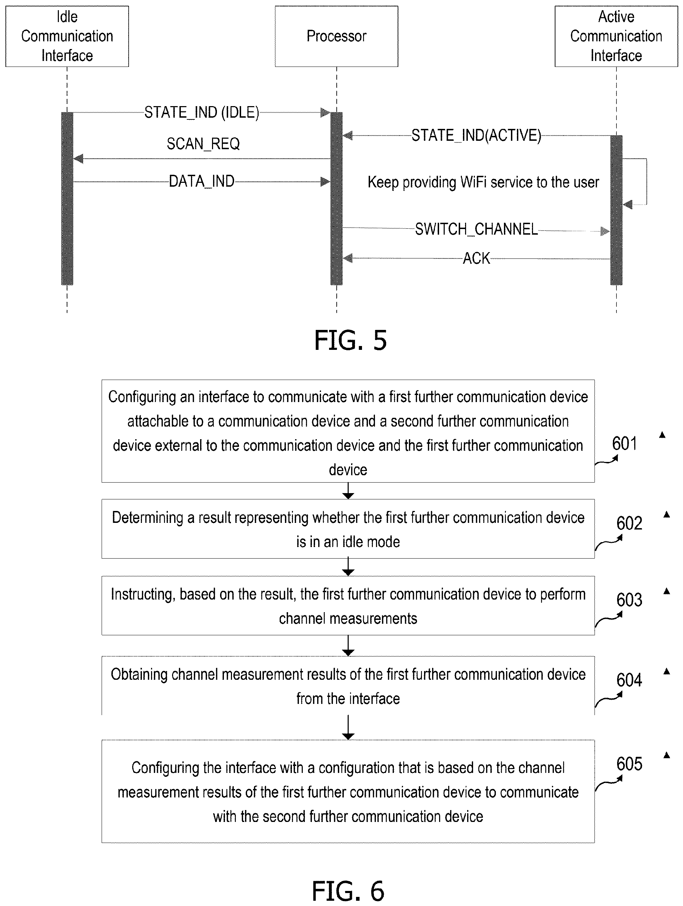

FIG. 5 shows an example of a messaging flow in accordance with various aspects described herein. The messaging flow is between an idle communication interface (e.g. the communication interface of the first communication device 311), a processor (e.g. the processor 401 of the second communication device 321), and an active communication interface (e.g. the communication interface 403 of the second communication device). In some examples, the processor 401 may implement operations associated with channel measurement results of the first communication device 311 using application layer functions (e.g. via an application running on the operating system) or at a driver level (e.g. driver of the communication interface 403, such as a Wi-Fi driver).

As illustrated herein, the processor may receive a STATE_IND (IDLE) message from the idle communication interface, which indicates that the state of the idle communication interface (e.g. state of the corresponding NIC) is at the idle state/mode. The processor may also receive STATE_IND (ACTIVE) message from the active communication interface, which indicates that the state of the active communication interface is active mode, in which the communication interface actively communicates with another device (e.g. the external communication device 350). The processor may send a SCAN_REQ message, which instructs the idle communication interface to initiate scans and perform channel measurements. The processor may receive a DATA_IND message indicating the channel measurement results of the channel measurements performed by the idle communication interface. Meanwhile, the active communication interface is configured by the processor to keep providing Wi-Fi service to the user. Based on the channel measurement results, the processor may encode a SWITCH_CHANNEL message indicating a switch from the current channel of the active communication interface to provide Wi-Fi service to another channel. In response to the switching, the processor may receive acknowledgment (ACK) message from the active communication interface.

In a second aspect with the example of the processor 401 being the processor of the first device 301, examples are provided such that the apparatus 400 is included by the first communication device 311 of the first device 301. In this aspect, the further communication device attachable to the first device 301 is the second device 302, and the second further communication device is the external communication device 350. It is to be noted that, this aspect has been described in this manner to illustrate further features of the apparatus, some of which may be relevant and combinable with the aspects described for the first aspect. Correspondingly, some features and examples are described herein may compliment to the features and examples described for the first aspect, while some other features and examples may be omitted to be described herein for brevity.

In the second aspect, the apparatus may perform channel measurements and communicate with the second device 302. The communication interface 403 may transmit and receive signals between the first device 301 and the second device 302, and the processor 401 may handle tasks such as encoding information, performing channel measurements, and processing results. The communication interface 403 may communicate with the second device 302 that is attachable to the first device 301. In this example, the communication interface 403 may include a passive radio communication circuit that communicates with the second device 302 via the internal connection. The communication interface 403 may operate in an idle mode when the first device 301 is not actively engaged in data transmission. However, even in this idle state, the communication interface 403 may remain capable of receiving requests from the second device 302 and transmitting data back to it.

When the second device 302 is actively communicating with the external communication device 350, the second device 302 may request assistance from the first device 301 in performing channel measurements. The communication interface 403 may receive this request via the internal connection and respond by initiating a series of measurements on available radio channels. The processor 401 may encode the results of these channel measurements for a transmission to the second device 302 via the same internal connection.

The processor 401 may encode information representing whether or not the first communication device 311 (e.g. the apparatus) is in an idle mode for transmission to the second device 302 to cause the second device 302 to be aware of whether or not the processor of the second device 302 can rely on the first device 301 for auxiliary tasks such as channel measurements. In this context, when the first device 301 enters an idle mode-typically when it is not actively engaged in transmitting or receiving data-the processor 401 may encode this information into a message that is transmitted to the second device 302 via their internal connection. The message may include details about the current state of the communication interface 403 (e.g., whether it is available for performing auxiliary tasks) and any relevant operational parameters. For example, if the first device 301 detects that the communication interface 403 has entered an idle state due to inactivity, the processor 401 may encode this information into a status message, which is then transmitted to second device 302, informing it that first device 301 is available for performing auxiliary tasks such as channel measurements.

Once the first device 301 has transmitted its status indicating that it is in an idle mode, the processor 401 may identify requests from the second device 302 to perform channel measurements. These requests may be received via the internal connection and may include instructions regarding which channels should be measured or what specific metrics should be collected during these measurements. For example, after receiving confirmation that the first device 301 is in idle mode, the second device 302 may send a request asking it to perform channel measurements on specific frequency bands. The processor 401 may identify this request by decoding incoming messages from the second device 302 and configure the communication interface 403 accordingly.

The processor 401 may perform measurements on a plurality of radio communication channels based on radio communication signals received by the communication interface 403, illustratively based on the received request. The processor 401 may initiate channel measurements in response to the request from the second device 302. Once this request is received via the internal connection, the processor 401 may prepare the communication interface 403 to scan multiple frequency bands. This scanning process may include receiving radio communication signals from various channels and collecting metrics such as RSSI, SNR, BER, HARQ as described herein. The processor 401 may perform these measurements across a wide range of channels to ensure that it gathers comprehensive data about current network conditions. In some cases, the processor 401 may focus on specific channels that have been identified as potential candidates for future communications based on historical data or predefined criteria.

In some examples, the processor 401 may initially confirm that first device 301 is in an idle mode. This confirmation may include monitoring internal activity levels (e.g., whether any ongoing data transmissions are occurring) and ensuring that no other tasks are currently using the communication interface 403. Once idle mode is confirmed, the processor 401 may listen for requests from the second device 302 via the internal connection, which may specify which channels should be measured or what specific metrics should be collected during these measurements.

The processor 401 may prepare the communication interface 403 to perform channel measurements. This preparation may include configuring the communication interface 403 to scan multiple frequency bands and collect real-time data about signal strength, interference levels, and other relevant metrics. In some cases, the processor 401 may also adjust parameters such as scanning intervals or measurement duration based on instructions provided by the second device 302.

Once all preparations are complete, the processor 401 may initiate channel measurements across multiple radio communication channels. After performing channel measurements on the plurality of radio communication channels, the processor 401 may encode information representing these results for transmission back to the second device 302.

In an example, the measurements performed by the processor 401 of the first device 301 may include assessing a plurality of radio communication channels based on a respective HARQ performance metric for each channel. The information representing the channel measurement results may further include one or more recommended radio communication channels based on this assessment. Noting that HARQ performance metrics may provide insights into how efficiently error correction mechanisms are functioning on each channel, the processor 401 may evaluate the HARQ performance for each channel by analyzing how many retransmissions are required to successfully deliver packets over that channel. In some examples, the processor 401 may prioritize channels with fewer retransmissions and lower error rates as they offer better communication reliability. Illustratively, if Channel A exhibits a low retransmission rate and high data integrity, while Channel B shows frequent packet losses, the processor 401 may recommend Channel A as a more reliable option for future communications. This recommendation can be based on HARQ assessments.

In an example, the processor 401 may select a radio communication channel from the plurality of channels measured. In an example, the processor 401 may then perform a radio communication with the external communication device 350) via this selected channel to determine a communication metric, such as signal strength or latency. The processor 401 may include the selected channel in the list of recommended channels based on this communication metric. For this purpose, after performing initial measurements across multiple channels, the processor 401 may select one or more promising channels for further testing. The processor 401 may further assess the selected channels based on metrics like signal strength (RSSI), latency, or throughput. For example, after identifying several candidate channels through an initial scanning, the first device 301 may establish short-lived connections with external communication device 350 via these channels. During these test communications, the processor 401 may collect metrics such as latency and packet delivery success rates. Correspondingly, the processor may add channels that exhibit low latency and high throughput to the list of recommended channels for future use by the second device 302.

In an example, the measurements performed by the processor 401 may include identifying available network access nodes based on radio communication signals received by the communication interface 403. The information representing these measurement results may further include one or more recommended network access nodes based on this assessment. For this purpose, when performing channel measurements in idle mode, the communication interface 403 may scan for nearby network access nodes (e.g., Wi-Fi routers or other access points). The processor 401 may evaluate these access nodes based on the channel measurements. Illustratively, the processor 401 may flag access nodes that can offer strong signals (e.g. over a predefined threshold) and minimal interference (below a predefined threshold) as optimal candidates for future connections.

In an example, after identifying available network access nodes through initial measurements, the processor 401 may select one of these nodes for further testing. The processor 401 may perform a radio communication with this selected network access node to determine a communication metric, such as signal strength or latency. Based on this metric, the processor 401 may include the selected node in the list of recommended network access nodes. For this purpose, after scanning for nearby access points and identifying several candidates, the processor 401 may cause the communication interface 403 to establish temporary connections with these access points to gather data about their performance under actual network conditions.

In an example, the processor 401 may determine to perform the measurements periodically or at designated intervals based on a request from the second device 302. For this purpose, the processor 401 may initiate channel measurements at regular time intervals, such as every few seconds or minutes, depending on the network's requirements. Alternatively, the processor 401 may cause the communication interface 403 to perform measurements only when explicitly requested by the second device 302. For example, when the first device 301 is in idle mode, the processor may receive a request from the second device 302 to perform periodic channel measurements. The processor 401 may then sets a timer to initiate measurements at regular intervals (e.g., every 30 seconds). During each interval, the processor 401 may cause the communication interface 403 to scan available channels and collect metrics such as RSSI and SNR. Correspondingly, the processor 401 may encode this data for a transmission to the second device 302 for further analysis.

In an example, the communication interface 403 may include a first communication interface configured to communicate with the further communication device (second device 302) and a second communication interface configured to perform measurements. This dual-interface setup may allow for simultaneous communication and measurement tasks, ensuring that data collection does not interfere with ongoing communications. Illustratively, the first communication interface may handle regular communications between the first device 301 and the second device 302, while the second communication interface may be dedicated to performing channel measurements. In an example, the communication interface 403 may be configured to operate according to an IEEE 802.11-based communication protocol as already described in the first aspect and maintain an established direct connection with the second device 302, while performing measurements on a plurality of radio communication channels.

In an example, the processor 401 may operate in a low power mode during the idle mode. Correspondingly, the first device 301 may conserve energy when it is not actively engaged in communication tasks, while still remaining available for auxiliary tasks such as channel measurements. For this purpose, the processor 401 may transition into a low power state when the first device 301 enters idle mode. In this state, the processor 401 may reduce its clock speed, disable non-essential components, and limit power consumption to a designated power required to maintain basic functionality. However, the processor 401 may still remain capable of responding to requests from the second device 302, such as the requests to perform channel measurements or other auxiliary tasks.

For example, when the first device 301 is not actively transmitting or receiving data, the processor 401 may enter a low power mode to conserve battery life. Despite being in this low power state, the processor 401 may still receive instructions from the second device 302 and wake up to perform necessary tasks like scanning available channels. After completing these tasks, the processor 401 may return to its low power state until further activity is required. Illustratively, if the second device 302 requests channel measurements while the first device 301 is in idle mode, the processor 401 may briefly exit low power mode to perform the measurements and then return to low power mode once the task is completed.

In an example, the processor 401 may determine whether the first communication device 311 is in idle mode based on information received from a further processor within the first communication device 311 or within the first device 301. This further processor is external to the processor 401 and may provide relevant status updates about the operational state of other components within the first device. For this purpose, the further processor may monitor various aspects of system activity-such as data transmission rates, user interactions, or sensor inputs-and relay this information to the processor 401. Based on this information, the processor 401 may determine whether the first device 301 is actively engaged in communication tasks or whether it has entered an idle state.

For example, if another processor within first device 301 (e.g., a baseband processor responsible for handling cellular communications) detects that no data transmissions are occurring over a certain period of time, it may inform the processor 401 that the device has become idle. The processor 401 may then use this information to transition into idle mode and initiate any necessary auxiliary tasks (e.g., periodic channel measurements). Illustratively, if the second device 302 requests assistance from the first device 301 while the first device 301 is idle, the processor 401 may rely on updates from the further processor to confirm that no active communications are occurring before proceeding with auxiliary tasks. This coordination between processors may ensure that system resources are used efficiently and that no unnecessary power is consumed.

In an example, during idle mode, the processor 401 may control its communication interface 403, while a further processor controls the communication interface when operating in a different power mode (e.g., an active or higher-power mode. For this purpose, when the first device 301 enters idle mode and transition into low power operation as described herein, the processor 401 may assume control over communication interface 403. In this state, the processor 401 may manage auxiliary tasks such as receiving requests from the second device 302 and performing the channel measurements. However, when the first device exits idle mode and resumes active operations (e.g., when data transmission resumes), the control over the communication interface 403 may shift back to another processor responsible for handling higher-level communication tasks.

In an example, the communication interface 403 may also be configured to operate in a low power mode during idle mode. The processor 401 may instruct the communication interface 403 to wake up from low power mode based on the request from the second device 302 and return the communication interface 403 to low power mode after completing any necessary measurements or auxiliary tasks. For this purpose, when the first device 301 enters idle mode, both the processor 401 and the communication interface 403 may transition into low power states. In this state, the communication interface 403 may consume minimal energy while remaining available for essential functions such as receiving requests or performing periodic scans of available channels.

For example, when the second device 302 requests channel measurements from the first device 301 while it is in idle mode, the processor 401 may instruct the communication interface 403 to briefly exit low-power operation so that necessary measurements can be performed. After completing these measurements (e.g., scanning available channels for RSSI values), the communication interface may return automatically back into its low-power configuration until further activity occurs.

In an example, the energy consumption for performing periodic scans by the first device 301 may be calculated based on the power required for each scan and the frequency of scanning. For this purpose, each scan may consume 30 watt-seconds, assuming that the first device 301 uses 1 watt of power for a scanning duration of 30 seconds across multiple frequency bands (e.g., 2.4 GHz, 5 GHz, and 6 GHz). For example, if the scanning is performed every 5 minutes (representing a worst-case scenario), the total number of scans per day can be calculated as follows:

Number of scans per day=24 hours×60 minutes per hour / 5 minutes per scan=288 scans per day.

The energy consumed per day for performing these scans is:

Energy consumption per day=288 scans day×30 watt seconds per scan=8640 watt seconds per day.

To convert this energy consumption into watt-hours:

Energy consumption in watt hours day=8640 watt seconds per day / 3600 seconds per hour=2.4 watt hours per day.

Assuming that the battery capacity of the first device 301 is 60 watt-hours, the percentage of battery capacity consumed by these periodic scans can be calculated as:

$$2.4 \text{ watt hours} / 60 \text{ watt hours} \times 100 = 4\%$$

Illustratively, if the first device 301 is configured to perform periodic scans every five minutes, it would consume approximately 4% of its total battery capacity per day for these tasks. This calculation demonstrates how periodic scanning impacts battery life and helps optimize power management strategies within the multi-processor system 300.

FIG. 6 shows an example of a method. The method may include: configuring 601 an interface to communicate with a first further communication device attachable to a communication device and a second further communication device external to the communication device and the first further communication device; determining 602 a result representing whether the first further communication device is in an idle mode; instructing 603, based on the result, the first further communication device to perform channel measurements; obtaining 604 channel measurement results of the first further communication device from the interface; and configuring 605 the interface with a configuration that is based on the channel measurement results of the first further communication device to communicate with the second further communication device. A non-transitory computer-readable medium may include instructions which, if executed by a processor, cause the processor to perform the method.

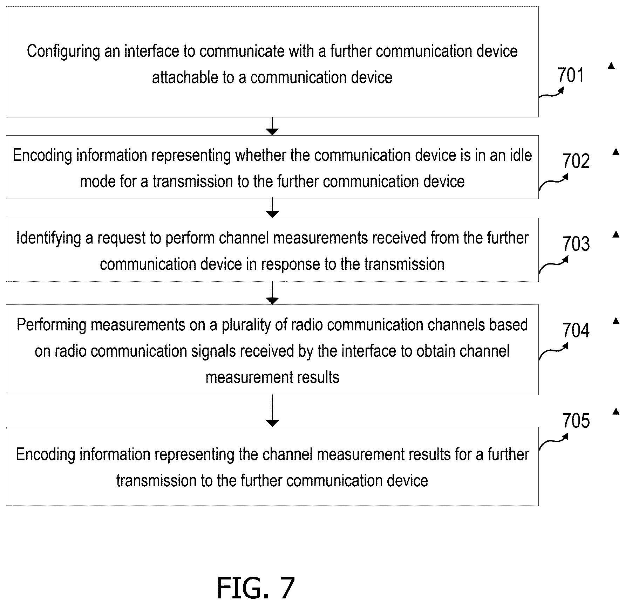

FIG. 7 shows an example of a method. The method may include: configuring 701 an interface to communicate with a further communication device attachable to a communication device; encoding 702 information representing whether the communication device is in an idle mode for a transmission to the further communication device; identifying 703 a request to perform channel measurements received from the further communication device in response to the transmission; performing 704 measurements on a plurality of radio communication channels based on radio communication signals received by the interface to obtain channel measurement results; and encoding 705 information representing the channel measurement results for a further transmission to the further communication device. A non-transitory computer-readable medium may include instructions which, if executed by a processor, cause the processor to perform the method.

The following examples pertain to further aspects described herein.

In example 1, the subject matter includes an apparatus including: an interface (e.g. communication interface) configured to communicate with a first further communication device attachable to the communication device and a second further communication device external to the communication device and the first further communication device; and a processor configured to: determine a result representing whether the first further communication device is in an idle mode; instruct, based on the result, the first further communication device to perform channel measurements; obtain channel measurement results of the first further communication device from the interface; and configure the interface with a first configuration that is based on the channel measurement results of the first further communication device to communicate with the second further communication device.

In example 2, the subject matter of example 1, wherein, in a period of time before obtaining the channel measurement results of the first further communication device, the interface is configured communicate with the second further communication device according to a second configuration.

In example 3, the subject matter of example 1 or example 2, wherein the second configuration includes a communication with the second further communication device via a first radio communication channel; wherein the processor is further configured to determine a second radio communication channel based on the channel measurements of the first further communication device; and wherein the first configuration includes a communication with the second further communication device via the second radio communication channel.

In example 4, the subject matter of example 1, wherein, in a period of time before obtaining the channel measurement results of the first further communication device, the interface is configured to communicate with a first network access node according to a second configuration that is different from the first configuration; and wherein the second further communication device is second network access node.

In example 5, the subject matter of example 4, wherein the processor is configured to determine the second network access node based on the channel measurement results of the first further communication device by selecting the second network access node from available network access nodes

In example 6, the subject matter of example 4 or example 5, wherein the processor is configured to instruct the interface to perform a handover from the first network access node to the second network access node based on the channel measurement results.

In example 7, the subject matter of any one of examples 1 to 6, wherein the channel measurement results includes one or more metrics including at least one of a received signal strength indicator (RSSI), a signal to noise ratio (SNR), a bit error rate (BER), or a hybrid automatic repeat request (HARQ) metric.

In example 8, the subject matter of any one of examples 1 to 7, wherein the processor is configured to provide the channel measurement results to a trained artificial intelligence or machine learning model (artificial intelligence and/or machine learning) configured to determine an output including information representing at least one of a radio communication channel or a candidate network access node; wherein the processor is configured to determine the first configuration based on the output of the trained artificial intelligence and/or machine learning.

In example 9, the subject matter of any one of examples 1 to 7, wherein the second further communication device is a network access node of a network; wherein the processor is configured to provide the channel measurement results to a trained artificial intelligence or machine learning model (AI/ML) configured to determine an output including radio communication channel assignments for the network access node to communicate with other communication devices within the network; wherein the processor is further configured to encode information representing the radio communication channel assignments for a transmission to the second further communication device.

In example 10, the subject matter of example 8 or example 9, wherein the trained AI/ML is further configured to determine the output based on user information representative of a received user feedback about the network including the communication device.

In example 11, the subject matter of any one of examples 1 to 10, wherein the processor is further configured to: instruct the communication device to operate as a relay between the first further communication device and the second further communication device.

In example 12, the subject matter of any one of examples 1 to 11, wherein the processor is further configured to: predict radio communication conditions to communicate with the second further communication device based on the channel measurement results of the first further communication device; determine the first configuration based on the radio communication conditions.

In example 13, the subject matter of any one of examples 1 to 12, wherein the processor is further configured to instruct the first further communication device to perform channel measurements periodically or with designated intervals.

In example 14, the subject matter of any one of examples 1 to 13, wherein the interface includes a first interface configured to communicate with the first further communication device and a second interface configured to communicate with the second further communication device simultaneously.

In example 15, the subject matter of any one of examples 1 to 14, wherein the interface is configured to: operate according to a IEEE 802.11 based communication protocol; maintain an established direct connection with the first further communication device during a presence of an established connection with the second further communication device to communicate with the first further communication device and the second further communication device.

In example 16, the subject matter of example 15, wherein the processor is configured to instruct the interface to operate in a Soft Access Point (softAP) mode.

In example 17, the subject matter of example 16, wherein the processor is configured to manage group owner operations to communicate with the first further communication device and coordinate resource sharing of the communication device via concurrent MAC operations.

In example 18, the subject matter includes an apparatus for a communication device, the apparatus including: a interface configured to communicate with a further communication device attachable to the communication device; and a processor configured to: encode information representing whether the communication device is in an idle mode for a transmission to the further communication device; identify a request to perform channel measurements received from the further communication device in response to the transmission; perform measurements on a plurality of radio communication channels based on radio communication signals received by the interface to obtain channel measurement results; and encode information representing the channel measurement results for a further transmission to the further communication device.

In example 19, the subject matter of example 18, wherein the channel measurement results includes one or more metrics including at least one of a received signal strength indicator (RSSI), a signal to noise ratio (SNR), a bit error rate (BER), or a hybrid automatic repeat request (HARQ) metric.

In example 20, the subject matter of example 18 or example 19, wherein the measurements includes assessing the plurality of radio communication channels based on a respective HARQ performance metric for each radio communication channel of the plurality of radio communication channels; wherein the information representing the channel measurement results further includes one or more recommended radio communication channels of the plurality of radio communication channels based on the assessment.

In example 21, the subject matter of any one of examples 18 to 20, wherein the further communication device is a first further communication device; wherein the processor is configured to: select a radio communication channel from the plurality of radio communication channels; perform a radio communication with a second further communication device via the radio communication channel to determine a communication metric; include the radio communication channel into the one or more recommended radio communication channels based on the communication metric.

In example 22, the subject matter of any one of examples 18 to 21, wherein the measurements includes identifying available network access nodes based on the radio communication signals received by the interface; wherein the information representing the channel measurement results further includes one or more recommended network access nodes of the available network access nodes based on the measurements.

In example 23, the subject matter of example 22, wherein the processor is configured to: select a network access node from the available network access nodes; perform a radio communication with the network access node to determine a communication metric; include the network access node into the one or more recommended network access nodes based on the communication metric.

In example 24, the subject matter of any one of examples 18 to 23, wherein the processor is further configured to determine to perform the measurements periodically or at designated intervals based on the request.

In example 25, the subject matter of any one of examples 18 to 24, wherein the interface includes a first interface configured to communicate with the further communication device and a second interface configured to perform the measurements.

In example 26, the subject matter of any one of examples 18 to 25, wherein the interface is configured to: operate according to a IEEE 802.11 based communication protocol; maintain an established direct connection with the further communication device during performing the measurements on the plurality of radio communication channels.

In example 27, the subject matter of any one of examples 18 to 26, wherein the processor is configured to operate in a low power mode during the idle mode.

In example 28, the subject matter of any one of examples 18 to 27, wherein the processor is configured to determine whether the communication device is in the idle mode based on information received from a further processor of the communication device, wherein the further processor of the communication device is external to the processor.

In example 29, the subject matter of example 28, wherein the processor is configured to control the interface during the idle mode; and wherein the interface is controlled by the further processor of the communication device in a further power mode that is different from a further processor low power mode.

In example 30, the subject matter of any one of examples 18 to 29, wherein the interface is configured to operate in a interface low power mode during the idle mode; wherein the processor is configured to instruct the interface to wake up the interface from the low power mode based on the request; wherein the interface is further configured to switch back to the low power mode after performing of the measurements.

In example 31, the subject matter includes a method for a communication device, the method including: configuring an interface to communicate with a first further communication device attachable to the communication device and a second further communication device external to the communication device and the first further communication device; determining a result representing whether the first further communication device is in an idle mode; instructing, based on the result, the first further communication device to perform channel measurements; obtaining channel measurement results of the first further communication device from the interface; and configuring the interface with a first configuration that is based on the channel measurement results of the first further communication device to communicate with the second further communication device.

In example 32, the subject matter of example 31, wherein, in a period of time before obtaining the channel measurement results of the first further communication device, configuring the interface to communicate with the second further communication device according to a second configuration that is different from the first configuration.

In example 33, the subject matter of example 31 or example 32, wherein the second configuration includes a communication with the second further communication device via a first radio communication channel; wherein the method further includes: determining a second radio communication channel based on the channel measurements of the first further communication device; and wherein the first configuration includes a communication with the second further communication device via the second radio communication channel.

In example 34, the subject matter of example 31, wherein, in a period of time before obtaining the channel measurement results of the first further communication device, configuring the interface to communicate with a first network access node according to a second configuration that is different from the first configuration; and wherein the second further communication device is second network access node.

In example 35, the subject matter of example 34, may further include: determining the second network access node based on the channel measurement results of the first further communication device by selecting the second network access node from available network access nodes

In example 36, the subject matter of example 34 or example 35, may further include: instructing the interface to perform a handover from the first network access node to the second network access node based on the channel measurement results.

In example 37, the subject matter of any one of examples 31 to 36, wherein the channel measurement results includes one or more metrics including at least one of a received signal strength indicator (RSSI), a signal to noise ratio (SNR), a bit error rate (BER), or a hybrid automatic repeat request (HARQ) metric.

In example 38, the subject matter of any one of examples 31 to 37, may further include: providing the channel measurement results to a trained artificial intelligence or machine learning model (AI/ML) configured to determine an output including information representing at least one of a radio communication channel or a candidate network access node; and determining the first configuration based on the output of the trained AI/ML.

In example 39, the subject matter of any one of examples 31 to 37, wherein the second further communication device is a network access node of a network; wherein the method further includes: providing the channel measurement results to a trained artificial intelligence or machine learning model (AI/ML) configured to determine an output including radio communication channel assignments for the network access node to communicate with other communication devices within the network; and encoding information representing the radio communication channel assignments for a transmission to the second further communication device.

In example 40, the subject matter of example 38 or example 39, wherein the trained AI/ML is further configured to determine the output based on user information representative of a received user feedback about the network including the communication device.

In example 41, the subject matter of any one of examples 31 to 40, may further include: instructing the communication device to operate as a relay between the first further communication device and the second further communication device.

In example 42, the subject matter of any one of examples 31 to 41, may further include: predicting radio communication conditions to communicate with the second further communication device based on the channel measurement results of the first further communication device; determining the first configuration based on the radio communication conditions.

In example 43, the subject matter of any one of examples 31 to 42, may further include: instructing the first further communication device to perform channel measurements periodically or with designated intervals.

In example 44, the subject matter of any one of examples 31 to 43, wherein the interface includes a first interface configured to communicate with the first further communication device and a second interface configured to communicate with the second further communication device simultaneously.

In example 45, the subject matter of any one of examples 31 to 44, may further include configuring the interface to: operate according to a IEEE 802.11 based communication protocol; and maintain an established direct connection with the first further communication device during a presence of an established connection with the second further communication device to communicate with the first further communication device and the second further communication device.

In example 46, the subject matter of example 45, may further include: instructing the interface to operate in a Soft Access Point (softAP) mode.

In example 47, the subject matter of example 46, may further include: managing group owner operations to communicate with the first further communication device and coordinating resource sharing of the communication device via concurrent MAC operations.

In example 48, the subject matter includes a method for a communication device, the method including: configuring an interface (e.g. communication interface) to communicate with a further communication device attachable to the communication device; encoding information representing whether the communication device is in an idle mode for a transmission to the further communication device; identifying a request to perform channel measurements received from the further communication device in response to the transmission; performing measurements on a plurality of radio communication channels based on radio communication signals received by the interface to obtain channel measurement results; and encoding information representing the channel measurement results for a further transmission to the further communication device.

In example 49, the subject matter of example 48, wherein the channel measurement results includes one or more metrics including at least one of a received signal strength indicator (RSSI), a signal to noise ratio (SNR), a bit error rate (BER), or a hybrid automatic repeat request (HARQ) metric.

In example 50, the subject matter of example 48 or example 49, wherein the measurements includes assessing the plurality of radio communication channels based on a respective HARQ performance metric for each radio communication channel of the plurality of radio communication channels; wherein the information representing the channel measurement results further includes one or more recommended radio communication channels of the plurality of radio communication channels based on the assessment.

In example 51, the subject matter of any one of examples 48 to 50, wherein the further communication device is a first further communication device; wherein the method further includes: selecting a radio communication channel from the plurality of radio communication channels; performing a radio communication with a second further communication device via the radio communication channel to determine a communication metric; including the radio communication channel into the one or more recommended radio communication channels based on the communication metric.

In example 52, the subject matter of any one of examples 48 to 51, wherein the measurements includes identifying available network access nodes based on the radio communication signals received by the interface; wherein the information representing the channel measurement results further includes one or more recommended network access nodes of the available network access nodes based on the measurements.

In example 53, the subject matter of example 52, may further include: selecting a network access node from the available network access nodes; performing a radio communication with the network access node to determine a communication metric; including the network access node into the one or more recommended network access nodes based on the communication metric.

In example 54, the subject matter of any one of examples 48 to 53, may further include: determining to perform the measurements periodically or at designated intervals based on the request.

In example 55, the subject matter of any one of examples 48 to 54, wherein the interface includes a first interface configured to communicate with the further communication device and a second interface configured to perform the measurements.

In example 56, the subject matter of any one of examples 48 to 55, may further include configuring the interface to: operate according to a IEEE 802.11 based communication protocol; and maintain an established direct connection with the further communication device during performing the measurements on the plurality of radio communication channels.

In example 57, the subject matter of any one of examples 48 to 56, may further include: operating in a low power mode during the idle mode.

In example 58, the subject matter of any one of examples 48 to 57, may further include: determining whether the communication device is in the idle mode based on information received from a further processor of the communication device, wherein the further processor of the communication device is external to the processor.

In example 59, the subject matter of example 58, may further include: controlling the interface during the idle mode; and wherein the interface is controlled by the further processor of the communication device in a further power mode that is different from a further processor low power mode.

In example 60, the subject matter of any one of examples 48 to 59, may further include configuring the interface to operate in a interface low power mode during the idle mode; and instructing the interface to wake up the interface from the low power mode based on the request; wherein the interface is further configured to switch back to the low power mode after performing of the measurements.

In example 61, the subject matter is a non-transitory computer-readable medium including instructions which, if executed by a processor, cause the processor to perform the method of any one of examples 31 to 60.

The word "exemplary" is used herein to mean "serving as an example, instance, or illustration". Any embodiment or design described herein as "exemplary" is not necessarily to be construed as preferred or advantageous over other embodiments or designs.

The words "plurality" and "multiple" in the description or the claims expressly refer to a quantity greater than one. The terms "group (of)", "set [of]", "collection (of)", "series (of)", "sequence (of)", "grouping (of)", etc., and the like in the description or in the claims refer to a quantity equal to or greater than one, i.e. one or more. Any term expressed in plural form that does not expressly state "plurality" or "multiple" likewise refers to a quantity equal to or greater than one.

Any vector and/or matrix notation utilized herein is exemplary in nature and is employed solely for purposes of explanation. Accordingly, the apparatuses and described herein accompanied by vector and/or matrix notation are not limited to being implemented solely using vectors and/or matrices, and that the associated processes and computations may be equivalently performed with respect to sets, sequences, groups, etc., of data, observations, information, signals, samples, symbols, elements, etc.

As used herein, "memory" is understood as a non-transitory computer-readable medium in which data or information can be stored for retrieval. References to "memory" included herein may thus be understood as referring to volatile or non-volatile memory, including random access memory ("RAM"), read-only memory ("ROM"), flash memory, solid-state storage, magnetic tape, hard disk drive, optical drive, etc., or any combination thereof. Furthermore, registers, shift registers, processor registers, data buffers, etc., are also embraced herein by the term memory. A single component referred to as "memory" or "a memory" may be composed of more than one different type of memory, and thus may refer to a collective component including one or more types of memory. Any single memory component may be separated into multiple collectively equivalent memory components, and vice versa. Furthermore, while memory may be depicted as separate from one or more other components (such as in the drawings), memory may also be integrated with other components, such as on a common integrated chip or a controller with an embedded memory.

The term "software" refers to any type of executable instruction, including firmware.

In the context described herein, the term "process" may be used, for example, to indicate a method. Illustratively, any process described herein may be implemented as a method (e.g., a channel estimation process may be understood as a channel estimation method). Any process described herein may be implemented as a non-transitory computer readable medium including instructions configured, when executed, to cause one or more processors to carry out the process (e.g., to carry out the method).

Throughout the drawings, it should be noted that like reference numbers are used to depict the same or similar elements, features, and structures, unless otherwise noted. It should be noted that certain components may be omitted for the sake of simplicity. It should be noted that nodes (dots) are provided to identify the circuit line intersections in the drawings including electronic circuit diagrams.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of' with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

As used herein, a signal or information that is "indicative of", "representative", "representing", or "indicating" a value or other information may be a digital or analog signal that encodes or otherwise, communicates the value or other information in a manner that can be decoded by and/or cause a responsive action in a component receiving the signal. The signal may be stored or buffered in computer-readable storage medium prior to its receipt by the receiving component and the receiving component may retrieve the signal from the storage medium. Further, a "value" that is "indicative of "or "representative" some quantity, state, or parameter may be physically embodied as a digital signal, an analog signal, or stored bits that encode or otherwise communicate the value.

As used herein, a signal may be transmitted or conducted through a signal chain in which the signal is processed to change characteristics such as phase, amplitude, frequency, and so on. The signal may be referred to as the same signal even as such characteristics are adapted. In general, so long as a signal continues to encode the same information, the signal may be considered as the same signal. For example, a transmit signal may be considered as referring to the transmit signal in baseband, intermediate, and radio frequencies.

The terms "processor" or "controller" as, for example, used herein may be understood as any kind of technological entity that allows handling of data. The data may be handled according to one or more specific functions executed by the processor. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

The terms "one or more processors" is intended to refer to a processor or a controller. The one or more processors may include one processor or a plurality of processors. The terms are simply used as an alternative to the "processor" or "controller".

The term "user device" is intended to refer to a device of a user (e.g. occupant) that may be configured to provide information related to the user. The user device may exemplarily include a mobile phone, a smart phone, a wearable device (e.g. smart watch, smart wristband), a computer, etc.

As utilized herein, terms "module", "component," "system," "circuit," "element," "slice," " circuit," and the like are intended to refer to a set of one or more electronic components, a computer-related entity, hardware, software (e.g., in execution), and/or firmware. For example, circuit or a similar term can be a processor, a process running on a processor, a controller, an object, an executable program, a storage device, and/or a computer with a processing device. By way of illustration, an application running on a server and the server can also be circuit. One or more circuits can reside within the same circuit, and circuit can be localized on one computer and/or distributed between two or more computers. A set of elements or a set of other circuits can be described herein, in which the term "set" can be interpreted as "one or more".

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art. The term "data item" may include data or a portion of data.

It will be understood that when an element is referred to as being "connected" or "coupled" to another element, it can be physically connected or coupled to the other element such that current and/or electromagnetic radiation (e.g., a signal) can flow along a conductive path formed by the elements. Inherently, such element is connectable or couplable to the another element. Intervening conductive, inductive, or capacitive elements may be present between the element and the other element when the elements are described as being coupled or connected to one another. Further, when coupled or connected to one another, one element may be capable of inducing a voltage or current flow or propagation of an electro-magnetic wave in the other element without physical contact or intervening components. Further, when a voltage, current, or signal is referred to as being "provided" to an element, the voltage, current, or signal may be conducted to the element by way of a physical connection or by way of capacitive, electro-magnetic, or inductive coupling that does not involve a physical connection.

# EP 4 766 010 A1

Unless explicitly specified, the term "instance of time" refers to a time of a particular event or situation according to the context. The instance of time may refer to an instantaneous point in time, or to a period of time which the particular event or situation relates to.

Unless explicitly specified, the term "transmit" encompasses both direct (point-to-point) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as RF transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/-formula/relationship and 'indirect' calculations via lookup or hash tables and other array indexing or searching operations.

While the above descriptions and connected figures may depict electronic device components as separate elements, skilled persons will appreciate the various possibilities to combine or integrate discrete elements into a single element. Such may include combining two or more circuits to form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method. All acronyms defined in the above description additionally hold in all claims included herein.

## Claims

1. An apparatus, comprising:

    an interface configured to communicate with a first further communication device attachable to a communication device and a second further communication device external to the communication device and the first further communication device;
    a processor configured to:

        determine a result representing whether the first further communication device is in an idle mode;
        instruct, based on the result, the first further communication device to perform channel measurements;
        obtain channel measurement results of the first further communication device from the interface; and
        configure the interface with a first configuration that is based on the channel measurement results of the first further communication device to communicate with the second further communication device.

2. The apparatus of claim 1, wherein, in a period of time before obtaining the channel measurement results of the first further communication device, the interface is configured to communicate with the second further communication device according to a second configuration.

3. The apparatus of any one of claims 1 or 2, wherein the second configuration comprises a communication with the second further communication device via a first radio communication channel;

    wherein the processor is further configured to determine a second radio communication channel based on the channel measurements of the first further communication device; and
    wherein the first configuration comprises a communication with the second further communication device via the second radio communication channel.

4. The apparatus of any one of claims 1 to 3, wherein, in a period of time before obtaining the channel measurement results of the first further communication device, the interface is configured to communicate with a first network access node according to a second configuration; and

wherein the second further communication device is a second network access node;
preferably wherein the processor is configured to determine the second network access node based on the channel measurement results of the first further communication device by selecting the second network access node from available network access nodes.

5. The apparatus of claim 4, wherein the processor is further configured to instruct the interface to perform a handover from the first network access node to the second network access node based on the channel measurement results.

6. The apparatus of any one of claims 1 to 5, wherein the processor is further configured to provide the channel measurement results to a trained artificial intelligence or machine learning model (AI/ML) configured to determine an output including information representing at least one of a radio communication channel or a candidate network access node; and
wherein the processor is configured to determine the first configuration based on the output of the trained AI/ML.

7. The apparatus of any one of claims 1 to 6, wherein the second further communication device is a network access node of a network;

wherein the processor is further configured to provide the channel measurement results to a trained artificial intelligence or machine learning model (AI/ML) configured to determine an output including radio communication channel assignments for the network access node to communicate with other communication devices within the network; and
wherein the processor is further configured to encode information representing the radio communication channel assignments for a transmission to the second further communication device.

8. The apparatus of any one of claims 1 to 7, wherein the interface is configured to:

operate according to an IEEE 802.11 based communication protocol; and
maintain an established direct connection with the first further communication device during a presence of an established connection with the second further communication device to communicate with the first further communication device and the second further communication device;
preferably wherein the processor is further configured to instruct the interface to operate in a Soft Access Point (softAP) mode;
wherein the processor is further configured to manage group owner operations to communicate with the first further communication device and coordinate resource sharing of the communication device via concurrent MAC operations.

9. An apparatus for a communication device, the apparatus comprising:

an interface configured to communicate with a further communication device attachable to the communication device;
a processor configured to:

encode information representing whether the communication device is in an idle mode for a transmission to the further communication device;
identify a request to perform channel measurements received from the further communication device in response to the transmission;
perform measurements on a plurality of radio communication channels based on radio communication signals received by the interface to obtain channel measurement results; and
encode information representing the channel measurement results for a further transmission to the further communication device.

10. The apparatus of claim 9, wherein the measurements comprises assessing the plurality of radio communication channels based on a respective HARQ performance metric for each radio communication channel of the plurality of radio communication channels; and
wherein the information representing the channel measurement results further comprises one or more recommended radio communication channels of the plurality of radio communication channels based on the assessment.

11. The apparatus of any one of claims 9 or 10, wherein the further communication device is a first further communication device; and
wherein the processor is further configured to:

select a radio communication channel from the plurality of radio communication channels;
perform a radio communication with a second further communication device via the radio communication channel to determine a communication metric; and
include the radio communication channel into the one or more recommended radio communication channels based on the communication metric;
preferably wherein the measurements comprises identifying available network access nodes based on the radio communication signals received by the interface; and wherein the information representing the channel measurement results further comprises one or more recommended network access nodes of the available network access nodes based on the measurements;
further preferably wherein the processor is further configured to:
select a network access node from the available network access nodes;
perform a radio communication with the network access node to determine a communication metric; and
include the network access node into the one or more recommended network access nodes based on the communication metric.

12. The apparatus of any one of claims 9 to 11, wherein the processor is further configured to determine whether the communication device is in the idle mode based on information received from a further processor of the communication device, wherein the further processor of the communication device is external to the processor;

preferably wherein the processor is configured to control the interface during the idle mode; and
wherein the interface is controlled by the further processor of the communication device in a further power mode that is different from a further processor low power mode.

13. The apparatus of claim 12, wherein the interface is configured to operate in a interface low power mode during the idle mode;

wherein the processor is configured to instruct the interface to wake up the interface from the low power mode based on the request; and
wherein the interface is further configured to switch back to the low power mode after performing of the measurements.

14. A non-transitory computer-readable medium comprising instructions which, if executed by a processor, cause the processor to:

control an interface to communicate with a first further communication device attachable to a communication device and a second further communication device external to the communication device and the first further communication device;
determine a result representing whether the first further communication device is in an idle mode;
instruct, based on the result, the first further communication device to perform channel measurements;
obtain channel measurement results of the first further communication device from the interface; and
configure the interface with a first configuration that is based on the channel measurement results of the first further communication device to communicate with the second further communication device.

15. The non-transitory computer-readable medium of claim 14, wherein, in a period of time before obtaining the channel measurement results of the first further communication device, the interface is configured to communicate with the second further communication device according to a second configuration.

100

110

102

120

104

FIG. 1

200

206

202

204

208

210

212

TX

RX

DSP

Protocol
controller

Application
processor

Memory

214

FIG. 2

FIG. 3

FIG. 4

| Idle Communication Interface | Processor | Active Communication Interface |
|---|---|---|

———STATE_IND (IDLE)———▶

◀———STATE_IND(ACTIVE)———

◀———SCAN_REQ

———DATA_IND———▶   Keep providing WiFi service to the user

———SWITCH_CHANNEL———▶

◀———ACK———

## FIG. 5

Configuring an interface to communicate with a first further communication device attachable to a communication device and a second further communication device external to the communication device and the first further communication device                601

Determining a result representing whether the first further communication device is in an idle mode                602

Instructing, based on the result, the first further communication device to perform channel measurements                603

Obtaining channel measurement results of the first further communication device from the interface                604

Configuring the interface with a configuration that is based on the channel measurement results of the first further communication device to communicate with the second further communication device                605

## FIG. 6

Configuring an interface to communicate with a further communication device attachable to a communication device 701

Encoding information representing whether the communication device is in an idle mode for a transmission to the further communication device 702

Identifying a request to perform channel measurements received from the further communication device in response to the transmission 703

Performing measurements on a plurality of radio communication channels based on radio communication signals received by the interface to obtain channel measurement results 704

Encoding information representing the channel measurement results for a further transmission to the further communication device 705

FIG. 7

# EUROPEAN SEARCH REPORT

**Application Number**

EP 25 21 3656

## DOCUMENTS CONSIDERED TO BE RELEVANT

| Category | Citation of document with indication, where appropriate, of relevant passages | Relevant to claim |
|---|---|---|
| X | US 2023/012097 A1 (LIU YANG [CN]) 12 January 2023 (2023-01-12) | 1-5,8-15 |
| Y | * fig. 5B and 6, paragraphs 41-43, 111-115 * | 6,7 |
| | ----- | |
| Y | WO 2023/069534 A1 (INTEL CORP [US]) 27 April 2023 (2023-04-27) * fig. 5 and para. 27 * | 6,7 |
| | ----- | |

**CLASSIFICATION OF THE APPLICATION (IPC)**

INV.
H04W84/12
H04W88/06

**TECHNICAL FIELDS SEARCHED (IPC)**

H04W

The present search report has been drawn up for all claims

| Place of search | Date of completion of the search | Examiner |
|---|---|---|
| Munich | 19 March 2026 | Perez Robles, Eva |

## ANNEX TO THE EUROPEAN SEARCH REPORT
## ON EUROPEAN PATENT APPLICATION NO.

EP 25 21 3656

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2026

| Patent document cited in search report | Publication date | Patent family member(s) | | Publication date |
|---|---|---|---|---|
| US 2023012097 A1 | 12-01-2023 | CN | 111095982 A | 01-05-2020 |
| | | US | 2023012097 A1 | 12-01-2023 |
| | | WO | 2021120204 A1 | 24-06-2021 |
| WO 2023069534 A1 | 27-04-2023 | EP | 4420407 A1 | 28-08-2024 |
| | | US | 2024298225 A1 | 05-09-2024 |
| | | WO | 2023069534 A1 | 27-04-2023 |

EPO FORM P0459

For more details about this annex : see Official Journal of the European Patent Office, No. 12/82